# EUROPEAN PATENT SPECIFICATION

(11) **EP 1 028 266 B1**
(45) Date of publication and mention of the grant of the patent: **28.04.2004**
(21) Application number: 00102768.9
(22) Date of filing: 10.02.2000
(51) Int. Cl.: F16D 43/284

(54) **Centrifugal hydraulic clutch**
Zentrifugal- hydraulische Kupplung
Embrayage centrifuge hydraulique

(30) Priority: 10.02.1999 JP 3254899; 26.01.2000 JP 2000021802
(43) Date of publication of application: 16.08.2000
(73) Proprietor: Yutaka Giken Co., Ltd., Hamamatsu-shi, Shizuoka (JP)
(72) Inventor: Inoue, Koji, Hamamatsu-shi, Shizuoka (JP); Yoshimoto, Tokuji, Hamamatsu-shi, Shizuoka (JP)
(74) Representative: Melzer, Wolfgang, Dipl.-Ing.

(56) References cited:
- PATENT ABSTRACTS OF JAPAN vol. 011, no. 263 (M-619), 26 August 1987 (1987-08-26) & JP 62 067333 A (HONDA MOTOR CO LTD), 27 March 1987 (1987-03-27)

## Description

### BACKGROUND OF THE INVENTION

### FIELD OF THE INVENTION

The present invention relates to a centrifugal hydraulic clutch, and particularly, to an improvement in a centrifugal hydraulic clutch including a clutch casing connected to an input member with one end face of the casing opened, a pressing plate slidably mounted in the clutch casing, a pressure receiving plate secured to the open end of the clutch casing, and a friction clutch plate interposed between the pressing plate and the pressure receiving plate and connected to an output member, a centrifugal hydraulic pressure chamber being defined between the pressing plate and an end wall of the clutch casing and connected to a working oil supply passage provided in the input member, wherein the friction clutch plate is clamped between the pressing plate and the pressure receiving plate by a hydraulic pressure generated by the action of a centrifugal force received by a working oil supplied to the centrifugal hydraulic pressure chamber.

### DESCRIPTION OF THE RELATED ART

Such a centrifugal hydraulic clutch is already known, as disclosed, for example, in Japanese Patent Application Laid-open No.62-67333.

In the centrifugal hydraulic clutch described in the above Publication, a spool-type clutch valve is mounted in an outer periphery of the clutch casing and movable between a clutch-ON position and a clutch-OFF position, and the centrifugal hydraulic pressure chamber is put into communication with the working oil supply passage in the input shaft by operating the clutch valve into the clutch-ON position, and opened to the outside of the clutch casing by operating the clutch valve into the clutch-OFF position. For this reason, the distance from the working oil supply passage in the input shaft to the clutch valve in the outer periphery of the clutch casing is long. Therefore, when the clutch valve is operated into the clutch-ON position, a relatively long time is taken for filling the working oil into the centrifugal hydraulic pressure chamber, and it is not easy to say that the responsiveness of the clutch into the clutch-ON position is good.

### SUMMARY OF THE INVENTION

Accordingly, it is an object of the present invention to provide a centrifugal hydraulic clutch of the above-described type, wherein the responsiveness of the clutch into the clutch-ON position is improved.

To achieve the above object, according to a first aspect and feature of the present invention, there is provided a centrifugal hydraulic clutch comprising a clutch casing connected to an input member with one end face of the casing opened, a pressing plate slidably mounted in the clutch casing, a pressure receiving plate secured to the open end of the clutch casing, and a friction clutch plate interposed between the pressing plate and the pressure receiving plate and connected to an output member, wherein a centrifugal hydraulic pressure chamber is defined between the pressing plate and an end wall of the clutch casing and connected to a working oil supply passage provided in the input member, and the friction clutch plate is clamped between the pressing plate and the pressure receiving plate by a hydraulic pressure generated by a centrifugal force received by a working oil supplied to the centrifugal hydraulic pressure chamber, characterized in that an inlet valve is provided in a boss of the clutch casing connected to the input member for bringing the working oil supply passage and the centrifugal hydraulic pressure chamber into and out of communication with each other, while an outlet valve is provided in an outer periphery of the clutch casing for opening and closing the inside of the centrifugal hydraulic pressure chamber with respect to the outside, and a valve operating means is connected to the inlet valve and the outlet valve for alternately opening and closing the inlet and outlet valves.

With the first feature, the working oil supply passage in the input shaft and the oil chamber in the clutch casing can be connected to each other at a minimal distance. When the inlet valve is opened and, the outlet valve is closed, the working oil can be supplied quickly from the working oil supply passage in the input member into the centrifugal hydraulic pressure chamber, thereby enhancing the responsiveness of the centrifugal hydraulic clutch into its clutch-ON state.

According to a second aspect and feature of the present invention, there is provided a centrifugal hydraulic clutch comprising a clutch casing connected to an input member with one end face of the casing opened, a pressing plate slidably mounted in the clutch casing, a pressure receiving plate secured to the open end of the clutch casing, and a friction clutch plate interposed between the pressing plate and the pressure receiving plate and connected to an output member, wherein a centrifugal hydraulic pressure chamber is defined between the pressing plate and an end wall of the clutch casing and connected to a working oil supply passage provided in the input member, and the friction clutch plate is clamped between the pressing plate and the pressure receiving plate by a hydraulic pressure generated by the action of a centrifugal force received by a working oil supplied to the centrifugal hydraulic pressure chamber, characterized in that an orifice is provided in a boss of the clutch casing connected to the input member for permitting the working oil supply passage and the centrifugal hydraulic pressure chamber to communicate with each other and for limiting the amount of a working oil flown from the working oil supply passage to the centrifugal hydraulic pressure chamber, while an outlet valve is provided in an outer periphery of the clutch casing for opening and closing the inside of the centrifugal hydraulic pressure chamber with respect to the outside, and a valve operating means is connected to the outlet valve for opening and closing the outlet valve.

With the second feature, the working oil supply passage in the input shaft and the oil chamber in the clutch casing can be connected to each other at a minimal distance. Moreover, the discharging and supplying of the working oil from and to the working oil supply passage can be conducted only by opening and closing the outlet valve, thereby simplifying the arrangement of the clutch.

According to a third aspect and feature of the present invention, in addition to the first feature, the valve operating means includes a common valve operating plate which is connected to the inlet valve and the outlet valve and operated between a clutch-ON position and a clutch-OFF position, so that in the clutch-ON position of the valve operating plate, the inlet valve is opened and the outlet valve is closed, whereas in the clutch-OFF position, the inlet valve is closed and the outlet valve is opened.

With the third feature, even if the inlet and outlet valves are spaced apart from each other in a radial direction of the clutch casing, the alternately opening and closing operations of the inlet and outlet valves can be conducted easily and reliably by a simple reciprocal operating of the common valve operating plate.

According to a fourth aspect and feature of the present invention, in addition to the first or second feature, the clutch further includes an outlet bore which is provided in the outer periphery of the end wall of the clutch casing and which opens into the centrifugal hydraulic pressure chamber, the outlet valve comprising a reed valve being secured at its one end to the outer periphery of the end wall for opening and closing the outlet bore on the side of the centrifugal hydraulic pressure chamber, the valve operating means being connected to the outlet valve through a valve opening rod passed through the outlet bore, wherein in the clutch-ON position of the valve operating means, the valve opening rod is retracted from the outlet valve to permit the closing of the outlet valve, and in the clutch-OFF position, the valve opening rod is advanced to force the outlet valve to be open.

With the fourth feature, when the outlet valve is closed, a centrifugal hydraulic pressure in the centrifugal hydraulic pressure chamber acts as a force to close the outlet valve and hence, the sealability of the outlet valve can be enhanced.

According to a fifth aspect and feature of the present invention, in addition to the first or second feature, the clutch further includes an outlet bore which is provided in an outer peripheral wall of the clutch casing and which opens into the centrifugal hydraulic pressure chamber, and the outlet valve is integrally formed on the valve operating means and put into close contact with an outer peripheral surface of the outer peripheral wall in a slidable manner to open and close the outlet bore.

With the fifth feature, the structure of the outlet valve can be simplified by the integral formation of the outlet valve with the valve operating means.

According to a sixth aspect and feature of the present invention, in addition to the first or second feature, the clutch further includes an outlet bore provided in an outer peripheral wall of the clutch casing, an end of the outlet bore opening into the centrifugal hydraulic pressure chamber being formed to serve as a conical valve seat, the outlet valve comprising a spherical valve member capable of seating on the valve seat by the action of a centrifugal force, and the valve operating means is connected to the outlet valve through a valve opening rod passed through the end wall of the clutch casing, wherein in the clutch-ON position of the valve operating means, the valve opening rod is retracted from the outlet valve to permit the closing of the outlet valve, and in the clutch-OFF position, the valve opening rod is advanced to force the outlet valve to be open.

With the sixth feature, when the valve operating rod is moved away from the outlet valve in the clutch-ON position of the valve operating means, the outlet valve can be seated onto the valve seat by the actions of its own centrifugal force and a centrifugal hydraulic pressure in the centrifugal hydraulic pressure chamber, thereby reliably closing the outlet bore at a high sealability.

According to a seventh aspect and feature of the present invention, in addition to the first or second feature, the clutch further includes an outlet bore which is provided in an outer periphery of the end wall of the clutch casing and which opens into the centrifugal hydraulic pressure chamber, and the outlet valve is coupled to the valve operating means for opening and closing the outlet bore, and has a guide portion formed thereon and loosely engaged in the outlet bore.

With the seventh feature, the structure of the outlet valve can be simplified and moreover, the closing of the outlet valve can be reliably conducted by the aid of the guiding function of the guide portion.

According to an eighth aspect and feature of the present invention, in addition to the first or second feature, the clutch further includes an outlet bore provided in an outer peripheral wall of the clutch casing, an end of the outlet bore opening into the centrifugal hydraulic pressure chamber being formed to serve as a valve seat, the outlet valve being provided so as to be capable of seating on the valve seat by the action of a centrifugal force, the outlet valve having a portion which protrudes out of the outlet bore to the outer periphery of the clutch casing upon seating of the outlet valve on the valve seat, and the valve operating means is arranged to permit the seating of the outlet valve on the valve seat in the clutch-ON position of the valve operating means, and to urge the protruding portion of the outlet valve radially inwards to move the outlet valve away from the valve seat in the clutch-OFF position.

With the eighth feature, in the clutch-ON position of the valve operating means, the outlet valve can be seated onto the valve seat by the aid of its own centrifugal force and a centrifugal hydraulic pressure in the centrifugal hydraulic pressure chamber, thereby reliably closing the outlet bore at a high sealability. Moreover, any portion extending through the clutch casing is not present between the outlet valve and the valve operating means and hence, the oil-tightness of the centrifugal hydraulic pressure can be ensured easily.

According to a ninth aspect and feature of the present invention, in addition to any one of the first to third features, the clutch casing has an air bore provided therein and permitting an inner peripheral side of the centrifugal hydraulic pressure chamber to communicate with the outside.

With the ninth feature, when the inlet valve is closed and at the same time, the outlet valve is opened, the discharging of the working oil from the centrifugal hydraulic pressure chamber to the outlet valve can be conducted smoothly by flowing of air through the air bore into the centrifugal hydraulic pressure chamber, thereby enhancing the responsiveness of the shifting clutch into a clutch-OFF state. When the outlet valve is closed and at the same time, the inlet valve is opened, the filling of the working oil from the working oil supply passage into the centrifugal hydraulic pressure chamber can be conducted smoothly by flowing of air in the centrifugal hydraulic pressure chamber through the air bore to the outside, thereby enhancing the responsiveness of the shifting clutch into the clutch-ON state.

The above and other objects, features and advantages of the invention will become apparent from the following description of the preferred embodiments taken in conjunction with the accompanying drawings.

### BRIEF DESCRIPTION OF THE DRAWINGS

Figs.1 to 11 show a first embodiment of the present invention, wherein
Fig.1 is a vertical sectional view of a power unit for a motorcycle;
Fig.2 is an enlarged vertical sectional view of a transmitting system in the power unit;
Fig.3 is a sectional view taken along a line 3-3 in Fig.2;
Fig.4 is a view taken along a line 4-4 in Fig.2;
Fig.5 is a side view of the transmitting system;
Fig.6 is an enlarged view showing a shifting clutch (a centrifugal hydraulic clutch) shown in Fig.2 in a clutch-ON state;
Fig.7 is an enlarged view showing the clutch in a clutch-OFF state;
Fig.8 is a sectional view taken along a line 8-8 in Fig.2;
Fig.9 is a sectional view taken along a line 9-9 in Fig.2;
Fig.10 is an enlarged view showing a control valve of a lock-up clutch shown in Fig.2 in a closed state;
Fig.11 is an enlarged view showing the control valve in an opened state;
Fig.12 is a vertical sectional view showing a shifting clutch (a centrifugal hydraulic clutch) according to a second embodiment of the present invention in a clutch-ON state;
Fig.13 is a vertical sectional view showing the clutch in a clutch-OFF state;
Fig.14 is a vertical sectional view showing a shifting clutch (a centrifugal hydraulic clutch) according to a third embodiment of the present invention in a clutch-ON state;
Fig.15 is a vertical sectional view showing the clutch in a clutch-OFF state;
Fig.16 is a sectional view taken along a line 14-14 in Fig.14;
Fig.17 is a vertical sectional view showing a shifting clutch (a centrifugal hydraulic clutch) according to a fourth embodiment of the present invention in a clutch-ON state;
Fig.18 is a vertical sectional view showing the clutch in a clutch-OFF state;
Fig.19 is a vertical sectional view showing a shifting clutch (a centrifugal hydraulic clutch) according to a fifth embodiment of the present invention in a clutch-ON state;
Fig.20 is a vertical sectional view showing the clutch in a clutch-OFF state;
Fig.21 is a vertical sectional view showing a shifting clutch (a centrifugal hydraulic clutch) according to a sixth embodiment of the present invention in a clutch-ON state;
Fig.22 is a vertical sectional view showing the clutch in a clutch-OFF state;
Fig.23 is a vertical sectional view showing a shifting clutch (a centrifugal hydraulic clutch) according to a seventh embodiment of the present invention in a clutch-ON state.

### DESCRIPTION OF THE PREFERRED EMBODIMENTS

The present invention will now be described by way of preferred embodiments with reference to the accompanying drawings.

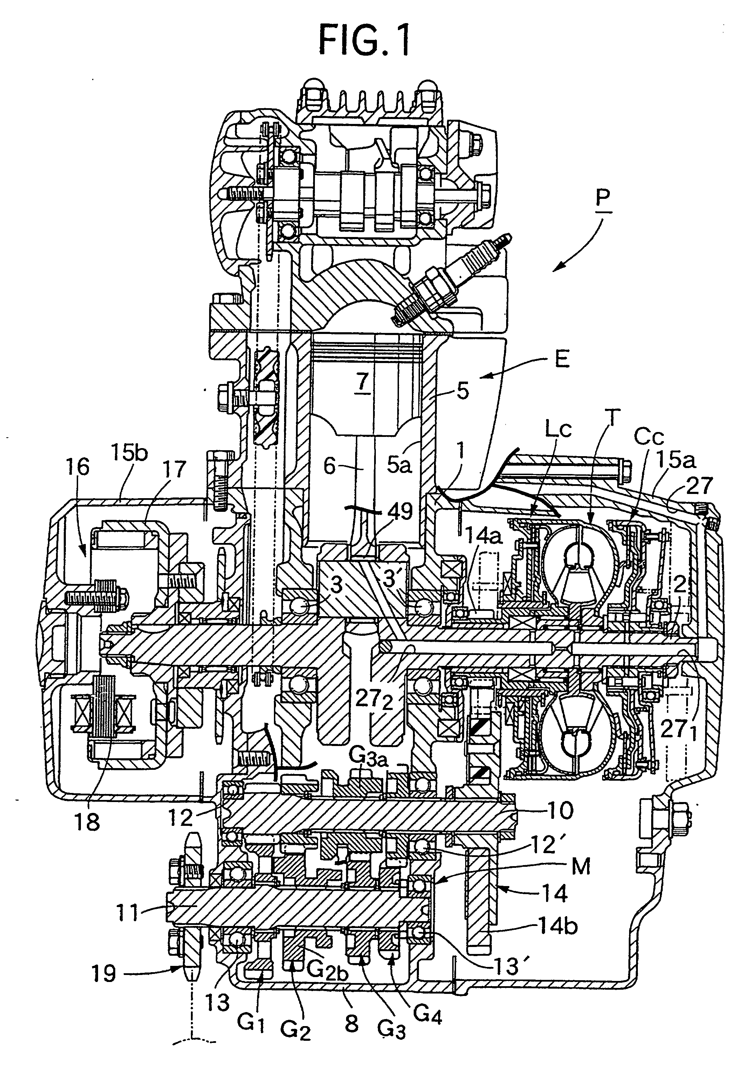

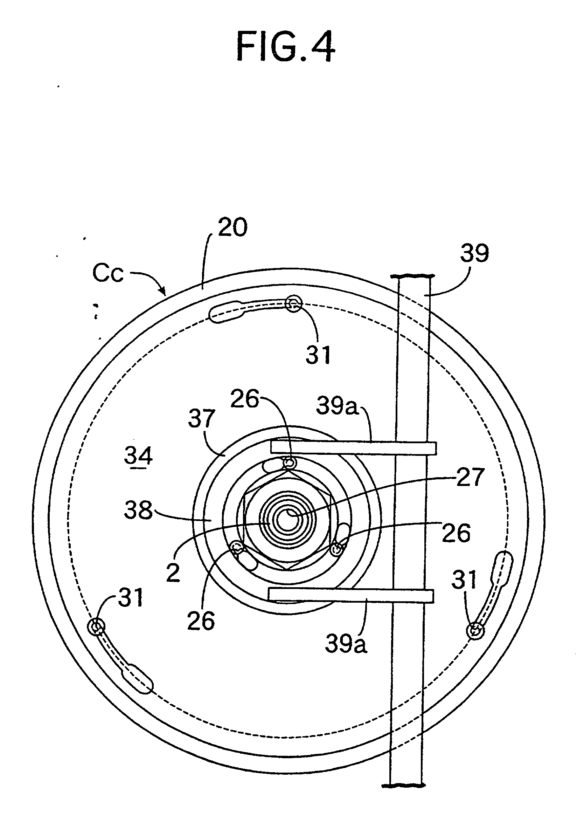

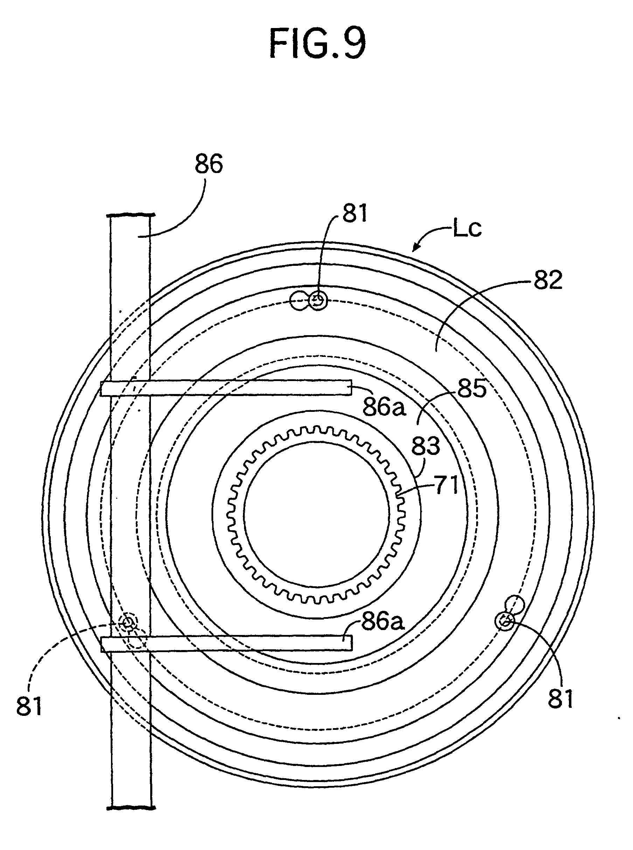

First, a first embodiment of the present invention will be described with reference to Figs.1 to 11. Referring to Fig.1, a power unit P for a motorcycle is comprised of an engine E and a multi-stage transmission M which are formed integrally with each other. The engine E includes, as conventionally normal, a crankshaft 2 carried in a crankcase 1 with a pair of left and right ball bearings 3 and 3' interposed therebetween, and a piston 7 slidably received in a cylinder bore 5a in a cylinder block 5 and connected to the crankshaft 2 through a connecting rod 6. A transmission case 8 is integrally connected to the crankcase, and input and output shafts 10 and 11 of the multi-stage transmission M, which are disposed in parallel to the crankshaft 2, are supported by opposite left and right sidewalls of the transmission case 8 with ball bearings 12 and 12'; 13 and 13' interposed therebetween, respectively. A first-speed gear train G₁, a second-speed gear train G₂, a third-speed gear train G₃ and a fourth-speed gear train G₄ are disposed in the named order from the left as viewed in Fig.1 over the input and output shafts 10 and 11. A driven gear G₂b in the second-speed gear train G₂ and a driving gear G₃a in the third-speed gear train G₃ also serve as shifting gears. When both of the shifting gears G₂b and G₃a are in their neutral positions, the transmission M is in a neutral state. When the shifting gear G₂b is moved leftwards or rightwards as viewed in Fig.1, the first-speed gear train G₁ or the third-speed gear train G₃ is established. When the shifting gear G₃a is moved leftwards or rightwards, the second-speed gear train G₂ or the fourth-speed gear train G₄ is established. The shifting gears G₂b and G₃a are operated by a known pedal-type changing device or another manual changing device which is not shown.

A right end of the crankshaft 2 and a right end of the input shaft 10 of the transmission M are connected to each other through a shifting clutch Cc, a torque converter T and a primary reducing device 14 which are connected together in series outside the crankcase 1 and the transmission case 8. In this case, especially, the shifting clutch Cc, the torque converter T and a driving gear 14a of the primary reducing device 14 are mounted on the crankshaft 2 in the order of the driving gear 14a, the torque converter T and the shifting clutch Cc from the right sidewall of the crankcase 1 toward the outside. A right side cover 15a, which covers the shifting clutch Cc, the torque converter T and the driving gear 14a, is bonded to right end faces of the crankcase 1 and the transmission case 8.

A rotor 17 of a generator 16 is secured to a left end of the crankshaft 2, and a stator 18 of the generator 16 is mounted to a left side cover 15b which is bonded to a left end face of the crankshaft 1 to cover the generator 16.

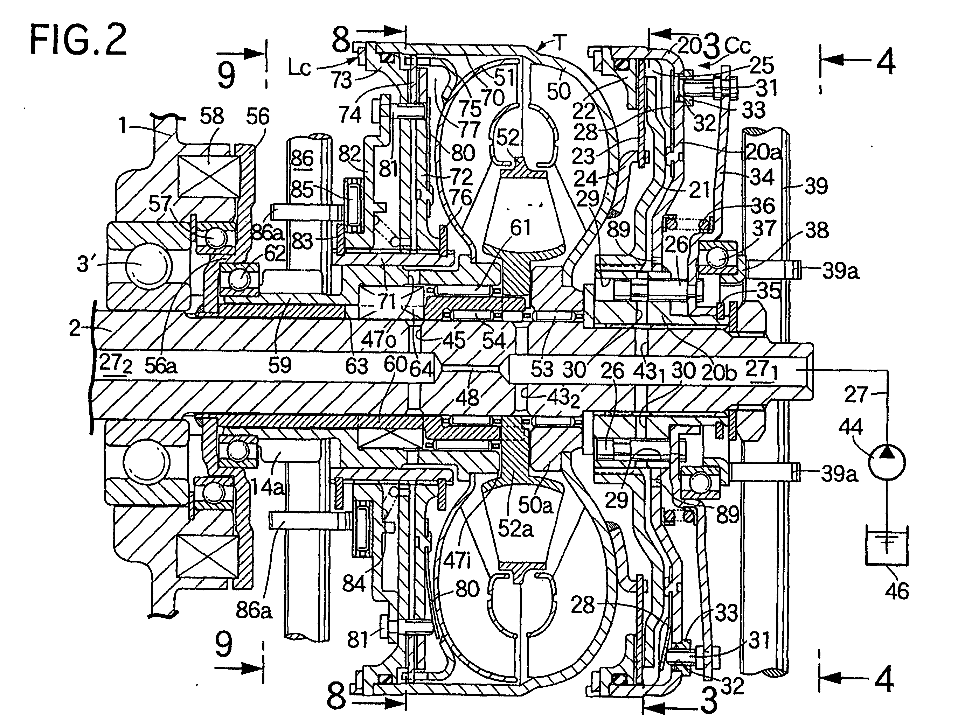

As shown in Figs.1 and 2, provided in the crankshaft 2 are an upstream supply oil passage 27₁ which opens into a right end face of the crankshaft 2, a downstream supply oil passage 27₂ which communicates with a needle bearing 49 on an outer peripheral surface of a crank pin supporting a larger end of the connecting rod 6, an orifice 48 which communicates directly with both the oil passages 27₁ and 27₂, a first flow-in bore 43₁ extending radially from the upstream supply oil passage 27₁ toward the shifting clutch Cc, a second flow-in bore 43₂ extending radially from the upstream supply oil passage 27₁ toward the torque converter T, and a flow-out bore 45 extending radially from the downstream supply oil passage 27₂ toward the torque converter T. An oil pumped from an oil reservoir 46 by an oil pump 44 driven by the engine E is fed under a pressure through an oil passage 27 to the upstream supply oil passage 27a. The oil reservoir 46 is defined in bottoms of the crankcase 1, the transmission case 8 and the right side cover 15a.

A chain-type final reducing device 19 which drives the rear wheel (not shown) of the motorcycle is connected to a left end of the output shaft 11 of the transmission M outside the transmission case 8.

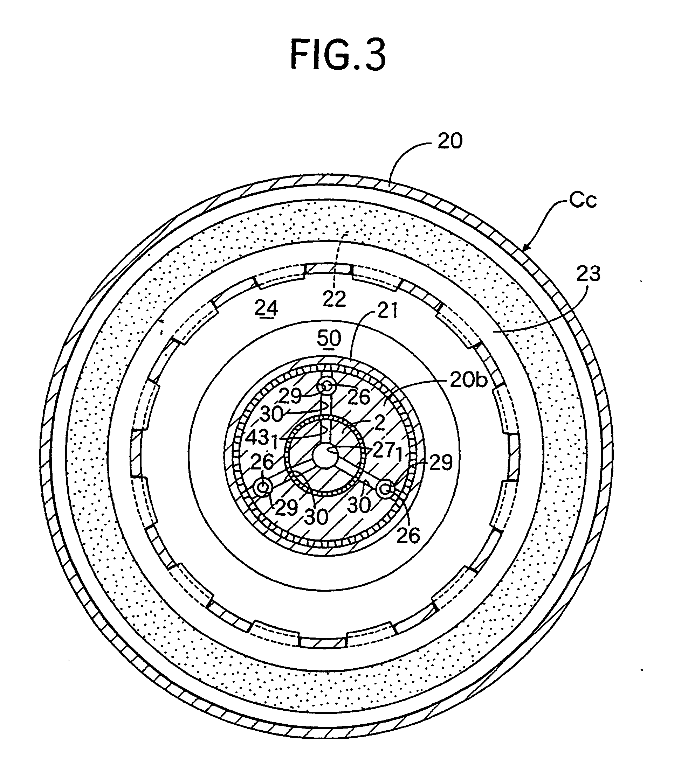

Referring to Figs. 1 and 2, the shifting clutch Cc includes a cylindrical clutch casing 20 having an end wall 20a at its one end and a boss 20b spline-coupled to the crankshaft 2 (input member) at its central portion, a pressing plate 21 disposed within the clutch casing 20 and slidably spline-coupled to an outer periphery of the boss 20b, a pressure receiving plate 22 oil-tightly secured to an opened end of the clutch casing 20, and an annular friction clutch plate 23 interposed between the pressing plate 21 and the pressure receiving plate 22. A transmitting plate 24 of a pump impeller-50, which will be described hereinafter, is spline-engaged with an inner periphery of the friction clutch plate 23 (see Fig.3).

The pressing plate 21 defines a centrifugal hydraulic pressure chamber 25 between an end wall 20a and a peripheral wall of the clutch casing 20. The centrifugal hydraulic pressure chamber 25 is connected to the first flow-in bore 43₁ in the crankshaft 2 through an inlet valve 26 provided on the boss 20b of the clutch casing 20, and opens to the outside of the clutch casing 20 through an outlet valve 28 provided on an outer periphery of the end wall 20a.

As shown in Figs.2 and 3, provided in the boss 20b are a plurality of (three in the illustrated embodiment) valve bores 29 extending in parallel to the crankshaft 2, and a plurality of through-bores 30 each extending via each of the valve bores 29 through the first flow-in bore 43₁ to the centrifugal hydraulic pressure chamber 25. The inlet valve 26 comprising a spool valve is slidably received in each of the valve bore 29. When the inlet valves 26 occupy their right positions as viewed in Fig.2 (upper half as viewed in Fig.2), the through-bores 30 are opened, and when the inlet valves 26 occupy their left positions (see lower half as viewed in Fig.2), the through-bores 30 are closed. To ensure the communication between the through-bores 30 in the boss 20b and the first flow-in bore 43₁ in the crankshaft 2, it is effective to cut off some of teeth in the coupled spline portions of the crankshaft 2 and the boss 20b.

A plurality of (three in the illustrated embodiment) outlet bores 32 are provided in an outer periphery of the end wall 20a of the clutch casing 20 at equal distances in a circumferential direction, and the outlet valve 28 comprising a reed valve is coupled at its one end by caulking to the end wall 20a and capable of opening and closing each of the outlet bores 32 on the side of the centrifugal hydraulic pressure chamber 25.

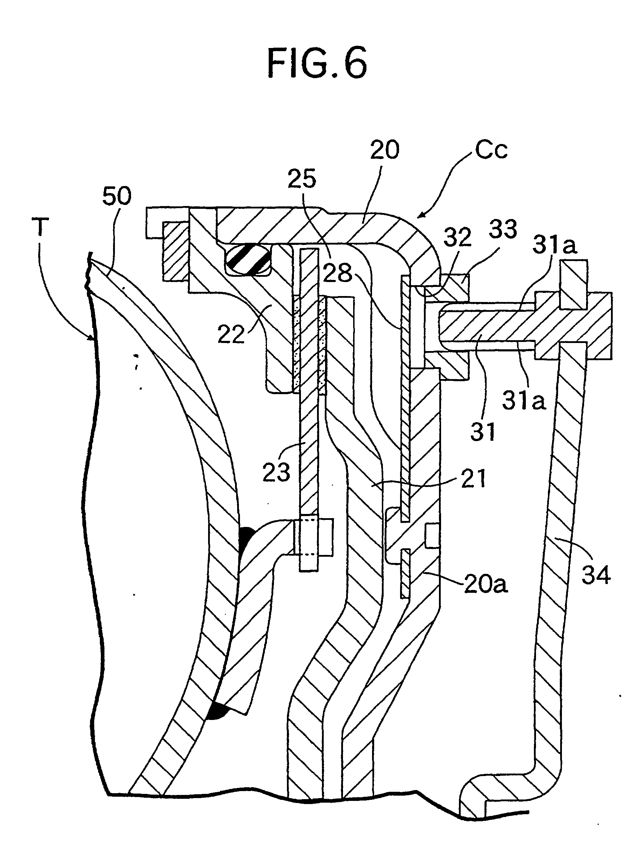

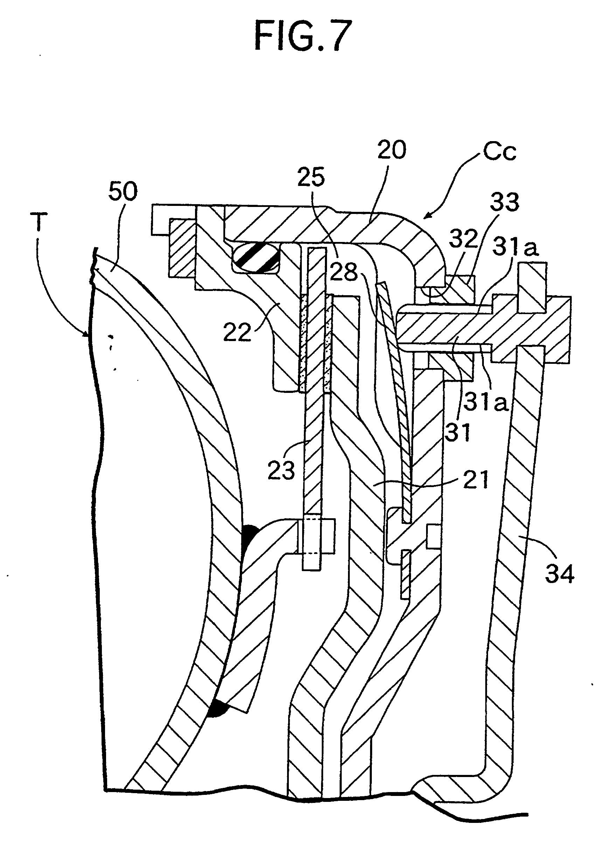

Further, guide collars 33 are secured to the end wall 20a and communicate with the outlet bores 32, and a valve opening rod 31 is slidably received in each of the guide collars 33. The valve opening rod 31 has an axially extending groove 31a around an outer periphery thereof. When the valve opening rod 31 occupies a right position as viewed in Fig. 2 (see the upper half as viewed in Fig. 2, and see Fig. 6), the closing of the outlet bore 32 by an own resilient force of the outlet valve 28 is permitted. When the valve opening rod 31 occupies a left position as viewed in Fig.2 (see the lower half as viewed in Fig.2, and see Fig.7), the outlet valve 28 is flexed inwards of the centrifugal hydraulic pressure chamber 25 to open the outlet bore 32.

A common valve operating plate 34 is connected to outer ends of the inlet valves 26 and the valve opening rods 31. The valve operating rod 34 is carried on the boss 20b of the clutch casing 20 for sliding movement in a lateral direction as viewed in Fig.2. A stopper ring 35 for defining the right position of the valve operating plate 34 is locked to the boss 20b, and a return spring 36 for biasing the valve operating plate 34 toward the stopper ring 35 is mounted under compression between the clutch casing 20 and the valve operating plate 34.

An urging ring 38 is mounted on the valve operating plate 34 with a release bearing 37 interposed therebetween and concentrically surrounding the boss 20b, and an arm 39a fixedly mounted on a shifting clutch operating shaft 39 is engaged with an outer end face of the urging ring 38. Thus, the valve operating plate 34 can be moved leftwards and rightwards along with the inlet valves 26 and the valve operating rods 31 in cooperation with the return spring 36 by reciprocally turning the shifting clutch operating shaft 39.

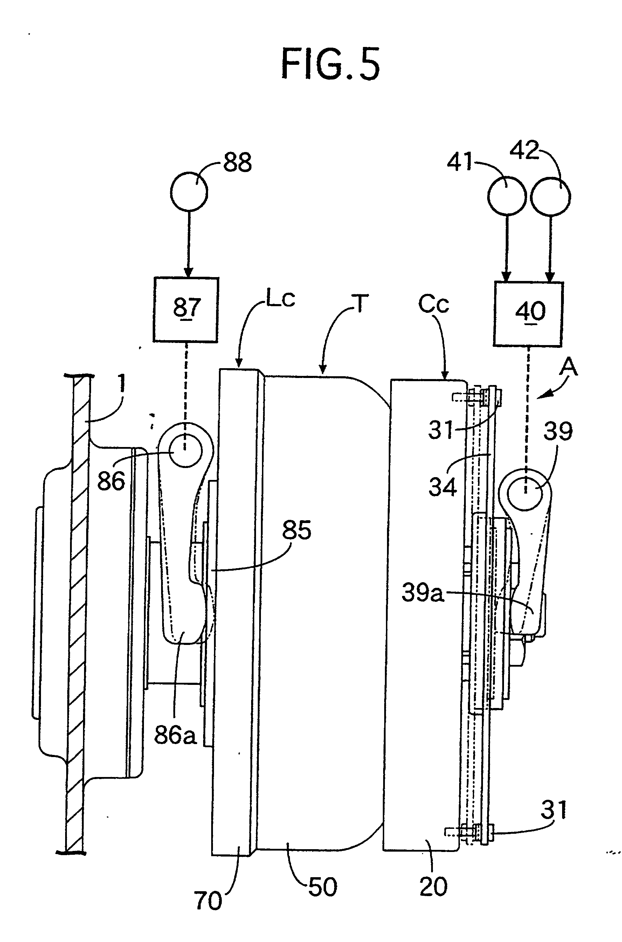

An electric or electromagnetic shifting clutch actuator 40 is connected to the shifting clutch operating shaft 39 for turning the shifting clutch operating shaft 39, as shown in Fig.5. The shifting clutch actuator 40 receives output signals from an idling sensor 41 for detecting an idling state of the engine E and a shifting sensor 42 for detecting the shifting operation of the transmission M, and moves in response to any of these signals to turn the shifting clutch operating shaft 39 in a clutch-OFF direction to move the valve operating plate 34 leftwards as viewed in Fig. 3. In the above description, the valve operating plate 34, the release bearing 37, the shifting clutch operating shaft 39, the shifting clutch actuator 40, the idling sensor 41 and the shifting sensor 42 constitute a valve operating means A for opening and closing the inlet valve 26 and the outlet valve 28 alternately.

A plurality of air bores 89 are provided in the end wall 20a of the clutch casing 20, and permit a central portion of the centrifugal hydraulic pressure chamber 25 to communicate with the outside.

The operation of the shifting clutch Cc will be described below. When the engine E is in operation and the idling sensor 41 and the shifting sensor 42 transmit no output signals, the shifting clutch actuator 40 is retained in an inoperative state and hence, the valve operating plate 34 is retained in its clutch-ON position, i.e., in the right position as viewed in Fig.2 by a biasing force of the return spring 36, thereby opening the inlet valves 26 and permitting the closing of the outlet valves 28. Therefore, the oil pumped from the oil pump 44 is supplied from the upstream supply oil passage 27₁ via the first flow-in bore 43₁ and the through-bores 30 to the centrifugal hydraulic pressure chamber 25 in the clutch casing 20 to fill the centrifugal hydraulic pressure chamber 25.

The clutch casing 20 is rotated along with the crankshaft 2 and hence, the oil in the centrifugal hydraulic pressure chamber 25 in the clutch casing 20 receives a centrifugal force to generate a hydraulic pressure, and the pressing plate 21 urges the friction clutch plate 23 against the pressure receiving plate 22 by such hydraulic pressure, whereby the pressing plate 21, the pressure receiving plate 22 and the friction clutch plate 23 are brought into friction engagement with one another. Namely, the shifting clutch Cc assumes an ON-state to transmit a torque output from the crankshaft 2 through the friction clutch plate 23 to the torque converter T.

On the other hand, during an idling of the engine E or during a shifting operation of the transmission M, the idling sensor 41 or the shifting sensor 42 outputs the output signal, and hence, the shifting clutch actuator 40 receiving the output signal is operated immediately to turn the shifting clutch operating shaft 39 to turn the shifting clutch operating shaft 39, thereby moving the valve operating plate 34 to the left position as viewed in Fig.2, i.e., to the clutch-OFF position. This closes the inlet valves 26 and at the same time, opens the outlet valves 28, as shown in the lower half of Fig.2. As a result, the supplying of the oil from the upstream supply oil passage 27₁ to the hydraulic pressure chamber 25 is cut off, and the oil in the centrifugal hydraulic pressure chamber 25 is passed through the outlet bores 32 and the grooves 31a in the valve operating rods 31 and discharged to the outside of the clutch casing 20 to drop the hydraulic pressure in the centrifugal hydraulic pressure chamber 25 and to remarkably decrease the urging force of the pressing plate 21 to the friction clutch plate 23. Therefore, the friction engagement of the three plates: the pressing plate 21, the pressure receiving plate 22 and the friction clutch plate 23, is released. Namely, the shifting clutch Cc assumes an OFF state to cut off the transmitting of the torque from the crankshaft 2 to the torque converter T. The oil discharged to the outside of the clutch casing 20 is returned to the oil reservoir 46.

When the rotation of the engine E is accelerated to start the vehicle from such state, or the shifting operation is completed, thereby stopping the delivery of the output signals from both the idling sensor 41 and the shifting sensor 42, the shifting clutch actuator 40 is immediately returned to its inoperative state, and the valve operating plate 34 is retracted at a stretch to the right position, i.e., the clutch-ON position by the biasing force of the return spring 36, thereby again opening the inlet valves 26 and at the same time, closing the outlet valves 28. Therefore, as can be seen from the above-described operation, the shifting clutch Cc is restored from the OFF state to the ON state without via a half-clutched state or a clutch-slipping state. Namely, the shifting clutch Cc is of an ON and OFF type having no half-clutched area and has a torque capacity which is set larger than that of the torque converter T.

The inlet valve 26 is disposed in the through-bore 30 provided in the boss 20b of the clutch casing 20 to connect the upstream supply oil passage 27₁ in the crankshaft 2 and the centrifugal hydraulic pressure chamber 25 in the clutch casing 20 at a minimal distance. Therefore, when the outlet valve 28 is closed and the inlet valve 26 is opened, the supplying of the working oil from the upstream supply oil passage 27₁ to the centrifugal hydraulic pressure chamber 25 can be achieved quickly, thereby enhancing the responsiveness of the shifting clutch Cc to the clutch-ON state.

Even if the inlet and outlet valves 26 and 28 are spaced apart from each other radially of the clutch casing 20, the alternate opening and closing of the inlet and outlet valves 26 and 28 can be carried out easily and reliably by a simple reciprocal operation of the valve operating plate 34, because the inlet and outlet valves 26 and 28 are operatively connected to each other by the common valve operating plate 34.

Further, the plurality of air bores 89 are provided in the end wall 20a of the clutch casing 20 to permit the central portion of the centrifugal hydraulic pressure chamber 25 to communicate with the outside. Therefore, when the inlet valve 26 is closed and the outlet valve 28 is opened, the discharging of the working oil from the centrifugal hydraulic pressure chamber 25 to the outlet valve 28 can be conducted smoothly by flowing of air from the air bores 89 into the centrifugal hydraulic pressure chamber 25, thereby enhancing the responsiveness of the shifting clutch Cc to the clutch-OFF state. When the outlet valve 28 is closed and the inlet valve 26 is opened, the filling of the working oil from the upstream supply oil passage 27₁ into the centrifugal hydraulic pressure chamber 25 can be conducted smoothly by flowing of air in the centrifugal hydraulic pressure chamber 25 through the air bores 89 to the outside. Thus, it is possible to enhance the responsiveness of the shifting clutch Cc to the clutch-ON state.

Moreover, the outlet valve 28 comprises a reed valve capable of opening and closing the outlet bore 32 in the end wall 20a of the clutch casing 20 on the side of the centrifugal hydraulic pressure chamber 25. Therefore, during closing of the outlet valve 28, a centrifugal hydraulic pressure in the centrifugal hydraulic pressure chamber 25 acts as a valve closing force, leading to an improved sealability of the outlet valve 28.

Referring again to Fig.2, the torque converter T comprises a pump impeller 50, a turbine impeller 51 and a stator impeller 52. The pump impeller 50 is disposed adjacent the pressure receiving plate 22, and has a boss 50a which is carried on the crankshaft 2 with a needle bearing 53 interposed therebetween. The transmitting plate 24 spline-engaged with the inner periphery of the friction clutch plate 23 is secured to an outer surface of the pump impeller 50. Therefore, a transmitted torque from the friction clutch plate 23 is transmitted through the transmitting plate 24 to the pump impeller 50.

A stator shaft 60 is disposed between the boss 50a of the pump impeller 50 and the ball bearing 3' carrying the crankshaft 2, and is carried at its right end on the crankshaft 2 with a needle bearing 54 interposed therebetween. A boss 52a of the stator impeller 52 is connected to the stator shaft 60 by concavo-convex engagement. A stator arm plate 56 is secured to a left end of the stator shaft 60, with an outer peripheral surface of a cylindrical portion 56a possessed at an intermediate portion by the stator arm plate 56 being carried on the crankcase 1 with a ball bearing 57 interposed therebetween. An outer periphery of the stator arm plate 56 is also carried on the crankcase 1 with a free wheel 58 interposed therebetween.

The turbine impeller 51 opposed to the pump impeller 50 has a turbine shaft 59 integrally provided at its center portion, and carried at its right end on the stator shaft 60 with a needle bearing 61 interposed therebetween. The turbine shaft 59 is carried at its left end on an inner peripheral surface of the cylindrical portion 56a of the stator arm plate 56 with a ball bearing 62 interposed therebetween. A one-way clutch 64 is provided between the turbine shaft 59 and the crankshaft 2 to extend through a lateral bore 63 in the stator shaft 60. When a reverse load is applied to the turbine shaft 59, the one-way clutch 64 is brought into an ON state to directly connect the turbine shaft 59 and the crankshaft 2 to each other.

As shown in Fig.2, a clearance defined between the boss 50a of the pump impeller 50, the turbine shaft 59 and the boss 52a of the stator impeller 52 serves as a fluid inlet 47i in the torque converter T, and a fluid outlet 47o in the torque converter T is provided at that portion of the turbine shaft 59 which extends out of the turbine impeller 51. The fluid inlet 47i communicates with the second flow-in bore 43₂ in the crankshaft 2, and the fluid outlet 47o communicates with the flow-out bore 45 in the crankshaft 2 through the lateral bore 63 in the stator shaft 60. Therefore, when the oil supplied from the oil pump 44 to the upstream supply oil passage 27₁ in the crankshaft 2 enters the second flow-in bore 43₂, it flows through the fluid inlet 47i into an oil chamber defined between the pump impeller 50 and the turbine impeller 51 to fill the oil chamber and a hydraulic pressure chamber 77 in a lock-up clutch Lc which will be described hereinafter, and then flows through the fluid outlet 47o via the flow-out bore 45 toward the downstream supply oil passage 27₂ in the crankshaft 2.

The driving gear 14a of the primary reducing device 14 is integrally formed on the turbine shaft 59, and the driven gear 14b meshed with the driving gear 14a is spline-coupled to the input shaft 10 of the transmission M. The primary reducing device 14 constructed in the above manner is disposed between the crankcase 1 and the torque converter T.

The operation of the torque converter T will be described below.

When the output torque from the crankshaft 2 is transmitted through the shifting clutch Cc which is in the ON state to the pump impeller 50, it is transmitted fluidally to the turbine impeller 51 by the action of the oil filling the inside of the torque converter T. If a torque amplifying effect has been generated between both the impellers 50 and 51 at this time, a reaction force attendant thereon is borne by the stator impeller 52, and the stator impeller 52 is fixedly supported on the crankcase 1 by the locking action of the free wheel 58. If no torque amplifying effect is generated, the stator impeller 52 can be raced by a racing action of the free wheel 58 and hence, the three impellers: the pump impeller 50, the turbine impeller 51 and the stator impeller 52, are all rotated in the same direction.

The torque transmitted from the pump impeller 50 to the turbine impeller 51 is transmitted through the primary reducing device 14 to the input shaft 10 of the transmission M and then transmitted sequentially via the selectively established shifting gear trains G1 to G4, the output shaft 11 and the finally reducing device 19 to the rear wheel (not shown) to drive the rear wheel.

During conduction of an engine brake during traveling of the vehicle, the one-way clutch 64 is brought into the ON state by application of the reverse load torque to the turbine shaft 59. Therefore, the turbine shaft 59 and the crankshaft 2 are connected directly to each other, whereby the reverse load torque is transmitted to the crankshaft 2 without via the torque converter T. Thus, it is possible to provide a good engine brake effect.

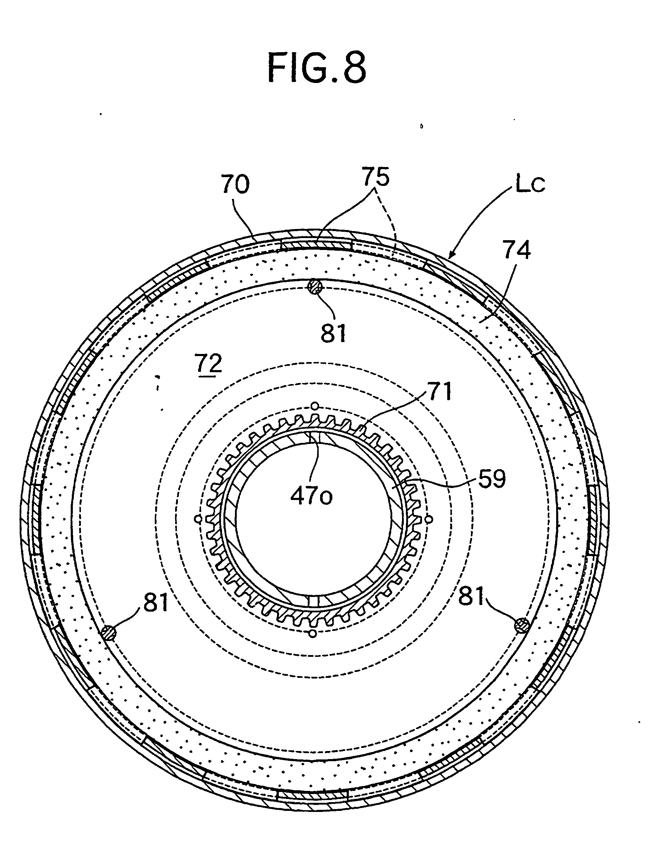

Referring again to Fig. 2, a lock-up clutch Lc is provided between the pump impeller 50 and the turbine impeller 51 and capable of directly connecting the pump impeller 50 and the turbine impeller 51 to each other. The lock-up clutch Lc includes a cylindrical clutch casing 70 which is connected to the outer periphery of the pump impeller 50 to surround the turbine impeller 51, a pressing plate 72 which is slidably spline-fitted over a support tube 71 rotatably carried on the outer peripheral surface of the turbine shaft 59, a pressure receiving plate 73 which is oil-tightly secured to an end of the pump extension 70 in an opposed relation to the pressing plate 72 and which is spline-fitted over the support tube 71, and a annular friction clutch plate 74 interposed between the pressing plate 72 and the pressure receiving plate 73. The friction clutch plate 74 has an outer periphery spline-engaged with a transmitting plate 75 secured to the outer surface of the turbine impeller 51 (see Fig.8). The retracted position of the pressing plate 72 to the pressure receiving plate 73 is defined by a stopper ring 76 locked to the support tube 71.

The inside of the clutch casing 70 is defined in a hydraulic pressure chamber 77 by the pressure receiving plate 73. The hydraulic pressure chamber 77 communicates with the insides of the pump impeller 50 and the turbine impeller 51 through opposed clearances between the pump impeller 50 and the turbine impeller 51. When the oil is filled in the hydraulic pressure chamber 77, during the operation of the torque converter T, the hydraulic pressure chamber 77 is at a high pressure, as are the insides of the pump impeller 50 and the turbine impeller 51.

As shown in Figs.2, 10 and 11, a plurality of (three in the illustrated embodiment) valve bores 78, 79 are provided in each of the pressing plate 72 and the pressure receiving plate 73 at circumferentially equal distances on the side of the inner periphery of the friction clutch plate 74, and a control valve 80 comprising a reed valve capable of opening and closing the valve bores 78 in the pressing plate 72 on the side of the hydraulic pressure chamber 77 is coupled at its one end to the pressing plate 72 by caulking.

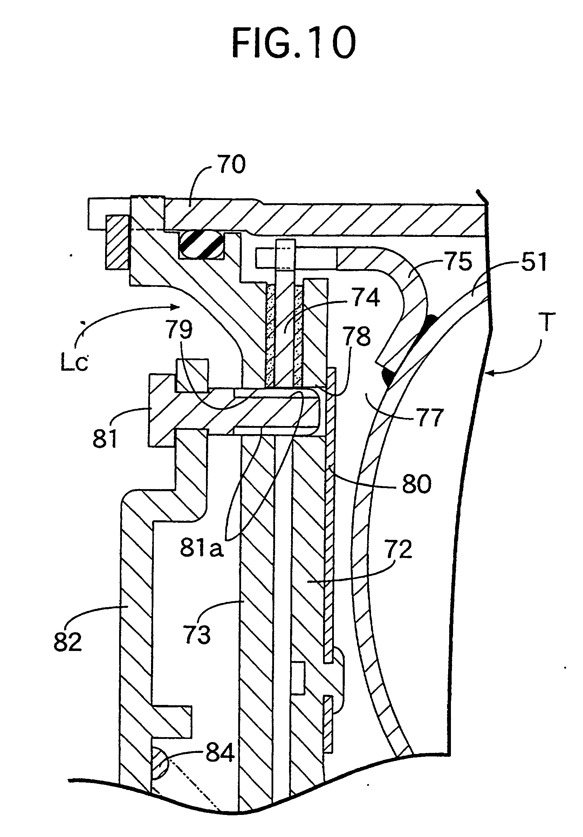

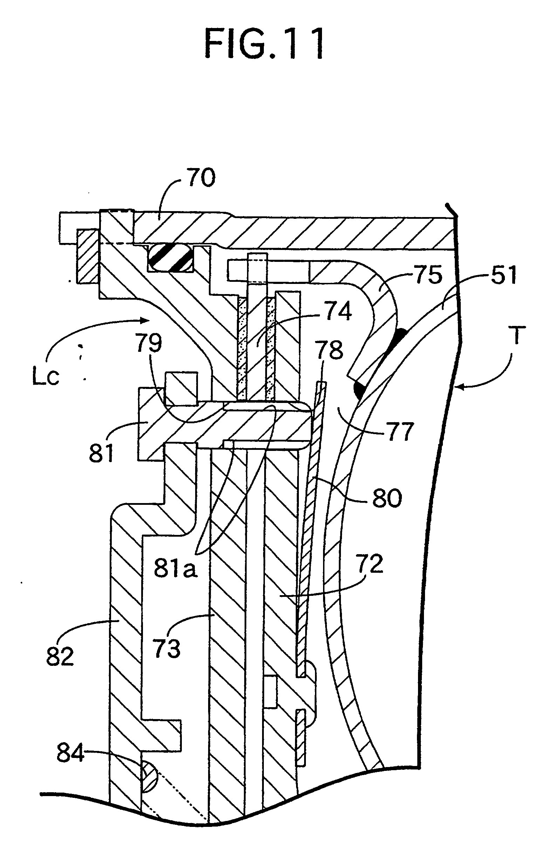

The valve bores 78 and 79 in the pressing plate 72 and the pressure receiving plate 73 are disposed coaxially with each other, and a control rod 81 for controlling the opening and closing of the control valve 80 is slidably received in the valve bores 78 and 79. The control rod 81 has an axially extending communication groove 81a in its outer periphery. When the control rod 81 occupies a left position as viewed in Fig.2 (see upper half of Fig. 2 and see Fig.10), the closing of the valve bore 78 by the own resilient force of the control valve 80 is permitted, and at the same time, the inner periphery of the friction clutch plate 74 is opened to the outside of the valve bore 79 in the pressure receiving plate 73 by the communication groove 81a in the control rod 81. When the control rod 81 occupies a right position as viewed in Fig.2 (see lower half of Fig.2 and see Fig.11), the valve bore 79 in the pressure receiving plate 73 is closed by the control rod 81, and at the same time, the control valve 80 is flexed inwards of the hydraulic pressure chamber 77, thereby permitting opposite side faces of the pressing plate 72 to communicate with each other through the communication groove 81a on the side of the inner periphery of the friction clutch plate 74.

A valve operating plate 82 is connected to an outer end of the control rod 81. The valve operating plate 82 is carried on the support tube 71 for sliding movement in a lateral direction as viewed in Fig.2. A stopper ring 83 for defining a left position of the valve operating plate 82 is locked to the support tube 71, and a return spring 84 for biasing the valve operating plate 82 toward the stopper ring 83 is mounted under compression between the pressure receiving plate 73 and the valve operating plate 82.

An arm 86a of a lock-up clutch operating shaft 86 is engaged with the valve operating plate 82 through a release bearing 85 which is disposed concentrically with the support tube 71, so that the valve operating plate 82 can be moved laterally along with the control rod 81 in cooperation with the return spring 84 by reciprocally turning the lock-up clutch operating shaft 86.

An electric or electromagnetic lock-up clutch actuator 87 is connected to the lock-up clutch operating shaft 86 for turning the lock-up clutch operating shaft 86, as shown in Fig. 5. The lock-up clutch actuator 87 receives an output signal from a vehicle speed sensor 88 for detecting a vehicle speed equal to or lower than a predetermined value, and moves in response to the signal to turn the lock-up clutch operating shaft 86 in a direction to move the valve operating plate 82 rightwards as viewed in Fig.2.

The operation of the lock-up clutch Lc will be described below. When the vehicle speed sensor 88 detects a vehicle speed equal to or lower than the predetermined value to deliver an output signal, the lock-up clutch actuator 87 is operated under reception of the signal to turn the lock-up clutch operating shaft 86, thereby moving the valve operating plate 82 rightwards as viewed in Fig.2. With this movement, the control rod 81 opens the control valve 80 to permit the opposite side faces of the pressing plate 72 to communicate with each other through the communication groove 81a, as shown in the lower half of the Fig. 2 and in Fig.11. Therefore, the hydraulic pressure in the hydraulic pressure chamber 77 is applied equally to the opposite side faces of the pressing plate 72, and the pressing plate 72 is urged to the retracted position by the urging force of the control rod 81 to the control valve 80, whereby the friction connection of the three plates: the pressing plate 72, the pressure receiving plate 73 and the friction clutch plate 74, does not occur, and the lock-up clutch Lc assumes the OFF state. Therefore, in this state, the relative rotation of the pump impeller 50 and the turbine impeller 51 is possible and hence, a torque amplifying effect can be provided. In this case, the valve bores 79 in the pressure receiving plate 73 are closed by the control rods 81 and hence, the useless leakage of the hydraulic pressure from the hydraulic pressure chamber 77 to the valve bores 79 can be prevented.

When the vehicle speed is increased up to a level equal to or higher than the predetermined value, and the vehicle speed sensor 88 stops the delivery of the output signal, the lock-up clutch actuator 87 returns to the inoperative state, and the valve operating plate 82 is retracted to the left position by the biasing force of the return spring 84, as shown in the upper half of Fig. 2 and in Fig. 10, thereby permitting the closing of the valve bores 78 by the control valve 80, and opening the inner periphery of the friction clutch plate 74 to the outside of the valve bores 79 through the communication grooves 81a in the control rods 81. Therefore, the pressing plate 72 receives the hydraulic pressure in the hydraulic pressure chamber 77 on its inner surface to urge the friction clutch plate 74 against the pressure receiving plate 73. As a result, the pressing plate 72, the pressure receiving plate 73 and the friction clutch plate 74 are brought into engagement with one another, whereby the lock-up clutch Lc is brought into the ON state to connect the pump impeller 50 and the turbine impeller 51 directly to each other. Therefore, during traveling of the motorcycle Vm at a high speed, the slipping of both the impellers 50 and 51 can be eliminated to enhance the transmitting efficiency.

During operation of the engine E, the oil discharged from the oil pump 44 flows first into the upstream supply oil passage 27₁ and then via the first flow-in bore 43₁ into the centrifugal hydraulic pressure chamber 25 in the shifting clutch Cc to contribute the operation and cooling of the shifting clutch Cc. In addition, the oil flows via the second flow-in bore 43₂ into the oil chamber defined between the pump impeller 50 and the turbine impeller 51 and into the hydraulic pressure chamber 77 in the lock-up clutch Lc to contribute to the operation and cooling of the torque converter T and the lock-up clutch Lc. The oil discharged from the hydraulic pressure chamber 77 through the flow-out bore 45 into the downstream supply oil passage 27₂ is supplied to the needle bearing 49 around the outer periphery of the crank pin to contribute to the lubrication of the needle bearing 49. The oil finishing the lubrication is scattered to the surroundings with the rotation of the crankshaft 2 to lubricate the piston 7 and the like. The oil pump 44 originally acts to supply the lubricating oil to the engine E, but the oil is utilized as an operating oil for the shifting clutch Cc, the torque converter T and the lock-up clutch Lc. Therefore, it is unnecessary to mount an exclusive oil pump for supplying the operating oil, thereby enabling the simplification of the arrangement.

The upstream and downstream supply oil passages 27₁ and 27₂ provided in the crankshaft 2 communicate directly with each other through the orifice 48 and hence, a portion of the oil fed from the oil pump 44 to the upstream supply oil passage 27₁ passes through the orifice 48 directly to the downstream supply oil passage 27₂ without via the torque converter T and the like. Therefore, it is possible to carry out the lubrication and cooling of the engine E satisfactorily.

On the other hand, in the torque converter T, the somewhat transmission of the torque occurs between the pump impeller 50 and the turbine impeller 51 even during idling of the engine E. However, the shifting clutch Cc is controlled to the OFF state during idling of the engine E, as described above and hence, even if the first-speed gear train G₁ of the multi-stage transmission M has been established, the transmission of a power to the shifting clutch Cc and the like can be cut off, irrespective of the presence of the torque converter T, thereby preventing a creeping phenomenon. This means that the transmitting members of the multi-stage transmission M are put in an unloaded state. Therefore, even when the shifting gear G₂b is shifted leftwards as viewed in Fig.1 to establish the first-speed gear train G₁ for starting the vehicle, the smooth shifting can be conducted without being accompanied by a torque shock. When the rotation of the engine E is accelerated to start the vehicle, the shifting clutch Cc is brought at a stretch to the ON state beyond the half-clutched or clutch-slipping area, but the accompanying torque shock is absorbed by the action of mutual slipping of the pump impeller 50 and the turbine impeller 51 of the torque converter T, whereby the smooth starting of the vehicle can be carried out with the aid of the amplifying effect. This can contribute to an improvement in riding comfort.

Even when the shifting gears G₂b and G₃a are shifted in a desired direction during traveling of the vehicle to conduct a desired shifting, the shifting clutch Cc is controlled each time to the OFF state, as described above, and the transmitting members of the multi-stage transmission M are brought into their unloaded states. Therefore, the smooth shifting can be conducted without being accompanied by a torque shock. Even after the shifting, the shifting clutch Cc is brought at a stretch to the ON state beyond the half-clutched or clutch-slipping area, but the accompanying torque shock is absorbed by the action of mutual slipping of the pump impeller 50 and the turbine impeller 51 of the torque converter T. Therefore, a sense of incompatibility is not provided to an occupant, and the riding comfort is improved.

In this way, the torque shock produced with turning-on and off of the shifting clutch Cc is absorbed to the torque converter T and hence, the shifting clutch Cc can be constructed into an on and off type having no half-clutched or clutch-slipping area. In addition, it is possible to avoid the heating and wearing of the friction portion due to the half-clutching or clutch slipping to enhance the durability of the shifting clutch Cc.

The torque capacity of the shifting clutch Cc is set at a value equal to or larger than that of the torque converter, and hence, even in a fully loaded state, the slipping of the shifting clutch Cc can be prevented, and the durability of the shifting clutch can be ensured.

In addition, the crankshaft 2 is rotated at a high speed by the input shaft 10 of the multi-stage transmission M driven through the reducing device 14 by the crankshaft 2. Therefore, the transmitted torque borne by the torque converter T and the shifting clutch Cc mounted to the crankshaft 2 is relatively small and hence, the capacities of the torque converter T and the shifting clutch Cc can be reduced correspondingly, leading to the compactness of the torque converter T and the shifting clutch Cc. In addition, the compactness of the power unit P can be provided despite the provision of both the torque converter T and the shifting clutch Cc.

Moreover, among the primary reducing device 14, the torque converter T and the shifting clutch Cc, the primary reducing device 14 is disposed nearest to the right sidewall of the crankcase 1, and the torque converter T is disposed nearer to the right sidewall. Therefore, the flexing moment applied to the crankshaft 2 and the input shaft 10 with the operation of the primary reducing device 14 can be minimized. In addition, the weight of the torque converter T is larger than that of the shifting clutch Cc, but the flexing moment applied to the crankshaft 2 due to the weights of the torque converter T and the shifting clutch Cc can be minimized, whereby the durability of the crankshaft 2, the input shaft 10 and the bearings 3' and 12' supporting the crankshaft 2 and the input shaft 10 can be enhanced in cooperation with the compactness of the torque converter T and the shifting clutch Cc.

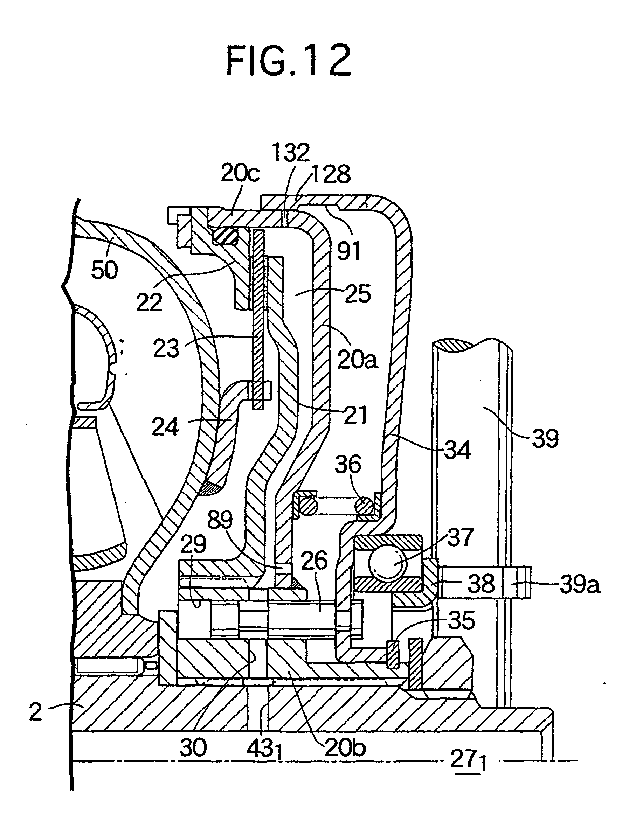

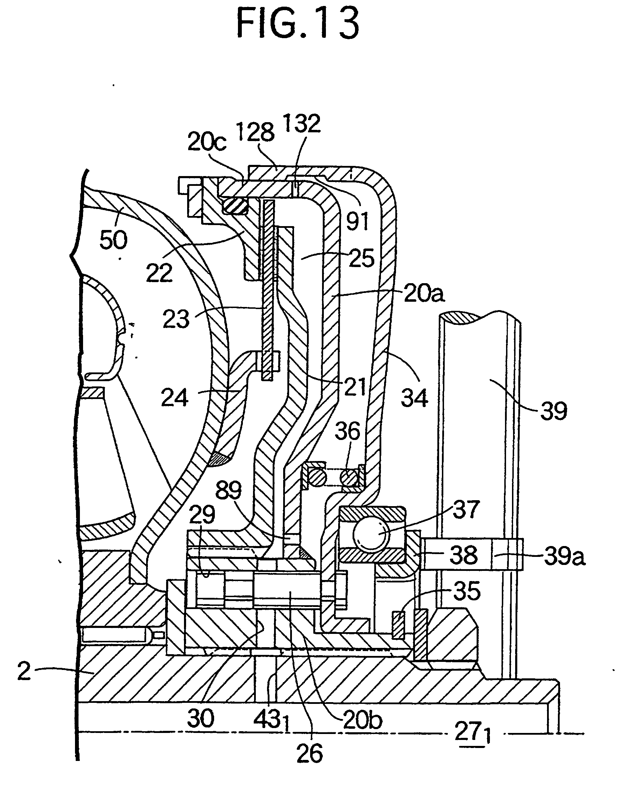

A second embodiment of the present invention will now be described with reference to Figs.12 and 13. The second embodiment is different from the previously described embodiment in respect of the arrangement of an outlet value 128. More specifically, a plurality of outlet bores 132 are provided at circumferentially equal distances in the outer peripheral wall 20c of the clutch casing 20 and open into the centrifugal hydraulic pressure chamber 25. A plurality of tongue piece-shaped outlet valves 128 are integrally provided on the valve operating plate 34 in correspondence to the outlet bores 132 to come into slidable close contact with the outer peripheral surface of the outer peripheral wall 20c. An escape groove 91 is provided in an inner peripheral surface of each of the outlet valves 128.

The other arrangement is similar to that in the previously described embodiment. In Figs.12 and 13, portions or components corresponding to those in the previously described embodiment are designated by like reference characters and the description of them is omitted.

In a clutch-ON position (a right position) of the valve operation plate 34 shown in Fig.12, the outlet valve 128 closes an outer open end of the outlet bore 132. On the other hand, in a clutch-OFF position (a left position) shown in Fig.13, the escape groove 91 is aligned to the outlet bore 132 to open the centrifugal hydraulic pressure chamber 25 to the outside. According to the second embodiment, the structure of the outlet valves 128 can be simplified by the integral formation of the outlet valves 128 on the valve operating plate 34.

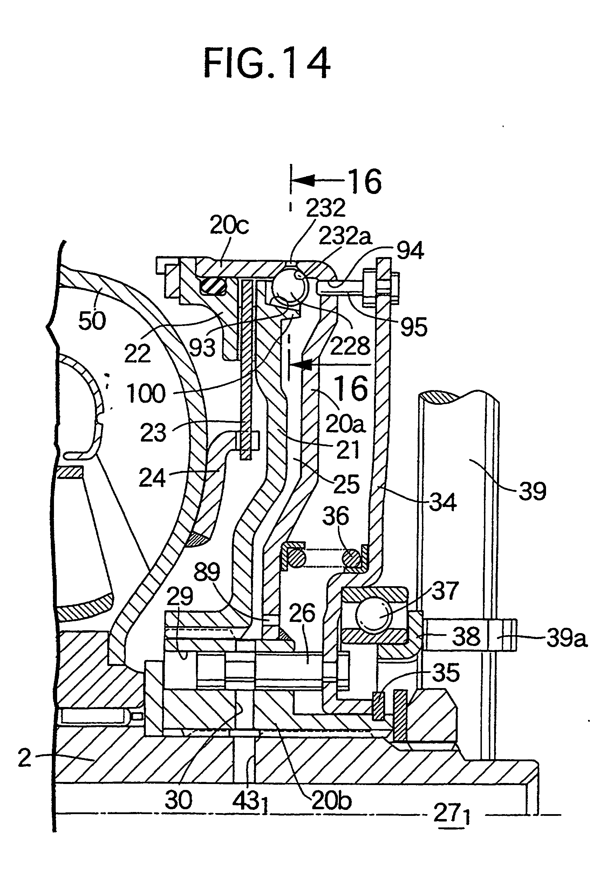

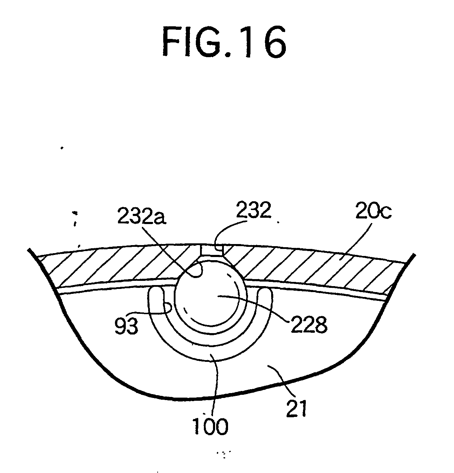

A third embodiment of the present invention will now be described with reference to Figs.14 to 16. The third embodiment is also different from the first embodiment in respect of the arrangement of an outlet valve 228. More specifically, a plurality of outlet bores 232 are provided at circumferentially equal distances in the outer peripheral wall 20c of the clutch casing 20 and open into the centrifugal hydraulic pressure chamber 25. An opening of each of the outlet bores 232 into the centrifugal hydraulic pressure chamber 25 is defined in a conical valve seat 232a, and a plurality of spherical outlet valves are disposed, so that they can be seated on the valve seats 232a. For the purpose of retaining the outlet valves 228, the pressing plate 21 is provided with a retaining recess 93 which accommodates each of the outlet valves 228, and a U-shaped retaining wall 100 connected to the retaining recess 93 and surrounding each of the outlet valve 228.

A plurality of guide bores 94 are provided in the end wall 20a of the clutch casing 20 in correspondence to the outlet valves 228, and valve opening rods 95 are secured to the valve operating plate 34 and slidably passed through the guide bores 94 in an opposed relation to side faces of the corresponding outlet valves 228. The other arrangement is similar to that in the previously described embodiment. In Figs.12 and 13, portions or components corresponding to those in the first embodiment are designated by like reference characters and the description of the them is omitted.

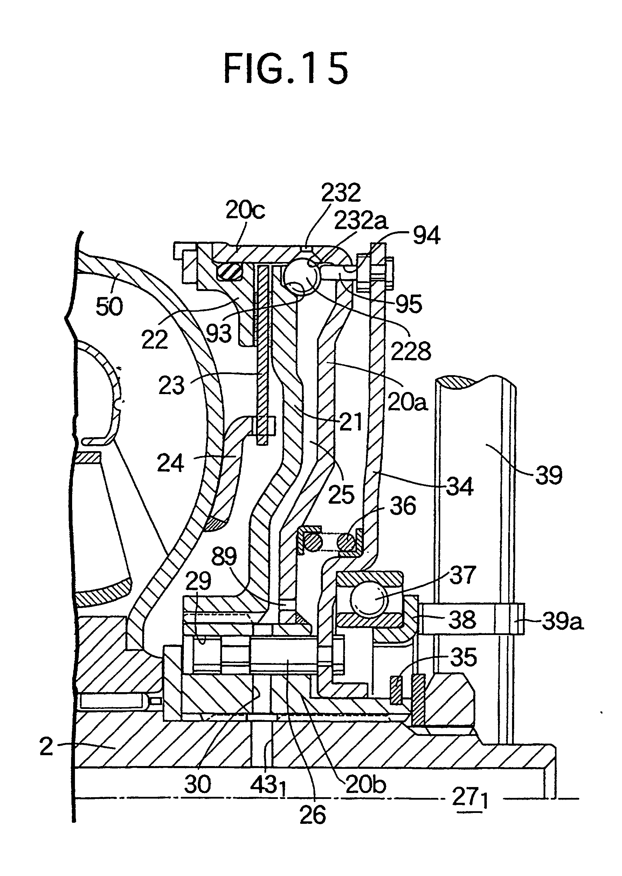

In a clutch-ON position (a right position) of the valve operating plate 34 shown in Fig.14, each of the valve opening rods 95 is spaced apart from the corresponding outlet valve 228, and each of the outlet valve 228 can be seated onto the valve seat 232a by its own centrifugal force and a centrifugal hydraulic pressure in the centrifugal hydraulic pressure chamber 25, thereby reliably closing the corresponding outlet bore 232. In a clutch-OFF position shown in Fig.15, each of the valve opening rods 95 urges the corresponding outlet valves 228 toward the retaining recess 93 in the pressing plate 21, so that the outlet valve 228 is spaced apart from the valve seat 232a. Thus, the outlet bore 232 can be opened.

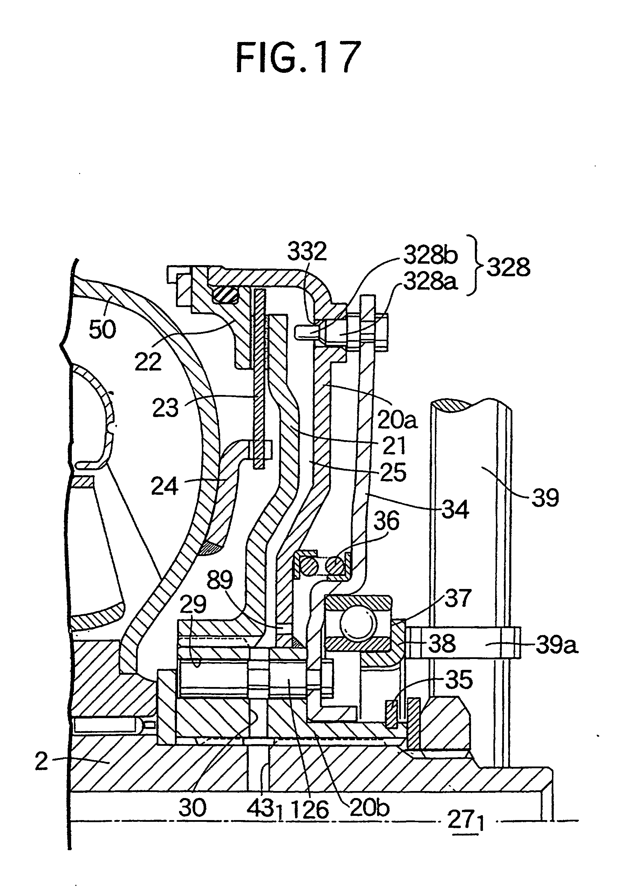

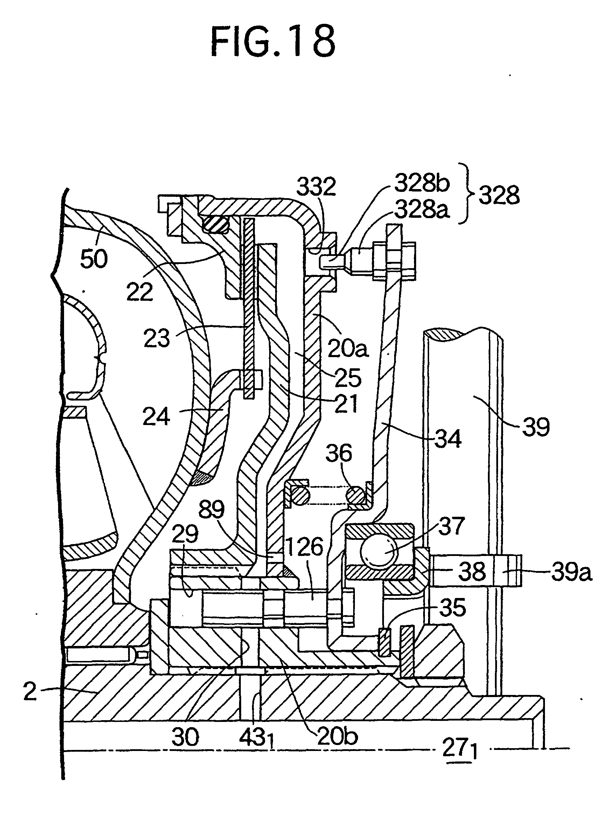

A fourth embodiment of the present invention will now be described with reference to Figs.17 and 18. The fourth embodiment is different from the first embodiment in respect of the arrangements of an inlet valve 126 and an outlet valve 328. More specifically, the valve operating plate 34 has a left position (see Fig.17) which is a clutch-ON position, and a right position (see Fig.18) which is a clutch-OFF position, unlike in the first embodiment. Therefore, the inlet valve 126 arranged, so that it is opened in the left position of the valve operating plate 34 and closed in the right position of the valve operating plate 34.

On the other hand, a plurality of outlet bores 332 are provided at circumferentially equal distances in the outer peripheral portion of the end wall 20a of the clutch casing 20, and a plurality of outlet valves 328 are secured to the valve operating plate 34 and engaged in the outlet bores 332. Each of the outlet valves 328 comprises a columnar valve portion 328a secured at a base portion thereof to the valve operating plate 34 by caulking, and a columnar guide portion 328b which is coaxially formed at a tip end of the valve portion 328a and which has a diameter smaller than that of the valve portion 328a. In the left position of the valve operating plate 34, the valve portion 328a is closely engaged into the outlet bore 332 to close the outlet bore 332. In the right position of the valve operating plate 34, only the guide portion 328b is loosely engaged into the outlet bore 332 to open the outlet bore 332.

Therefore, in the left position (the clutch-ON position) of the valve operating plate 34, the inlet valves 126 are opened, and the outlet valves 328 are closed. Therefore, the working oil can be supplied from the upstream supply oil passage 27₁ to the centrifugal hydraulic pressure chamber 25 to turn the shifting clutch Cc into its clutch-ON state. In the right position (the clutch-OFF position) of the valve operating plate 34, the inlet valves 126 are closed, and the outlet valves 328 are opened. Therefore, the working oil in the centrifugal hydraulic pressure chamber 25 can be discharged through the outlet valves 328 to the outside to turn the shifting clutch Cc into its clutch-OFF state. Particularly, since the guide portion 328b loosely engaged in the outlet bore 332 is formed on each of the outlet valve 328 secured to the valve operating plate 34 in the fourth embodiment, the close engagement of the valve portion 328a into the outlet bore 332,can be conducted smoothly by the aide of the guiding function of the guide portion 328b.

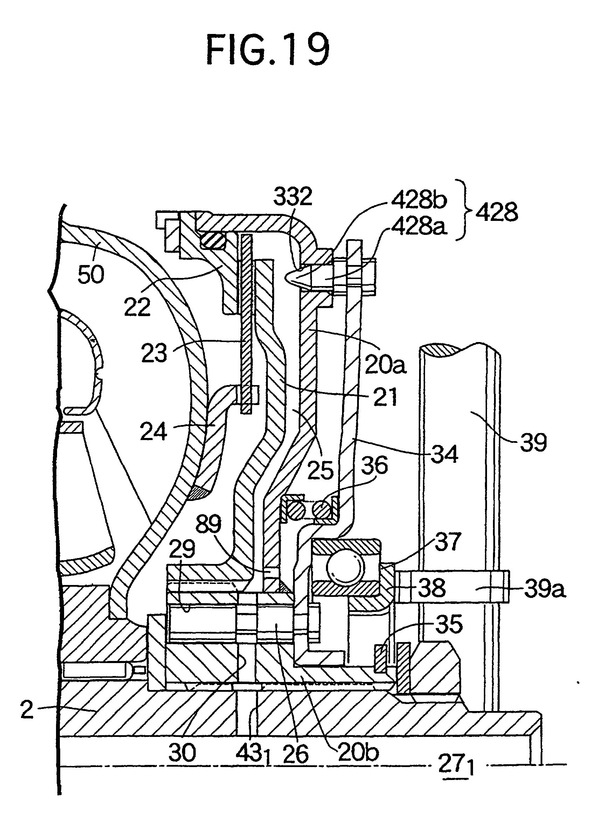

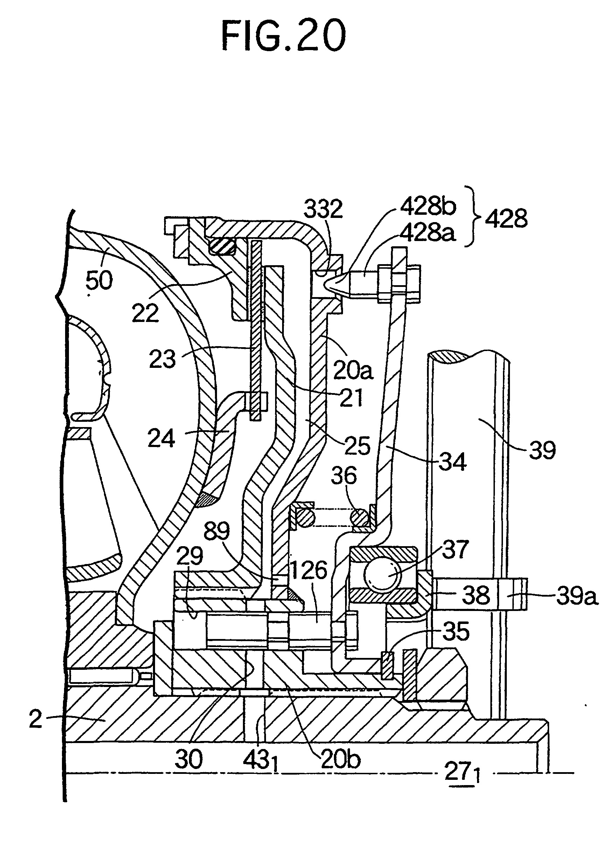

A fifth embodiment of the present invention will now be described with reference to Figs.19 and 20. The fifth embodiment is similar to the fourth embodiment, except that a guide portion 428b of each of outlet valves 428 which is engaged in an outlet bore 332 in the clutch casing 20 is formed into a conical shape. In Figs.19 and 20, portions or components corresponding to those in the fourth embodiment are designated by like reference characters, and the description of them is omitted.

According to the fifth embodiment, the close engagement of the valve portion 428a into the outlet bore 332 can be conducted smoothly by the aid of aligning and guiding functions of the conical guide portion 428b.

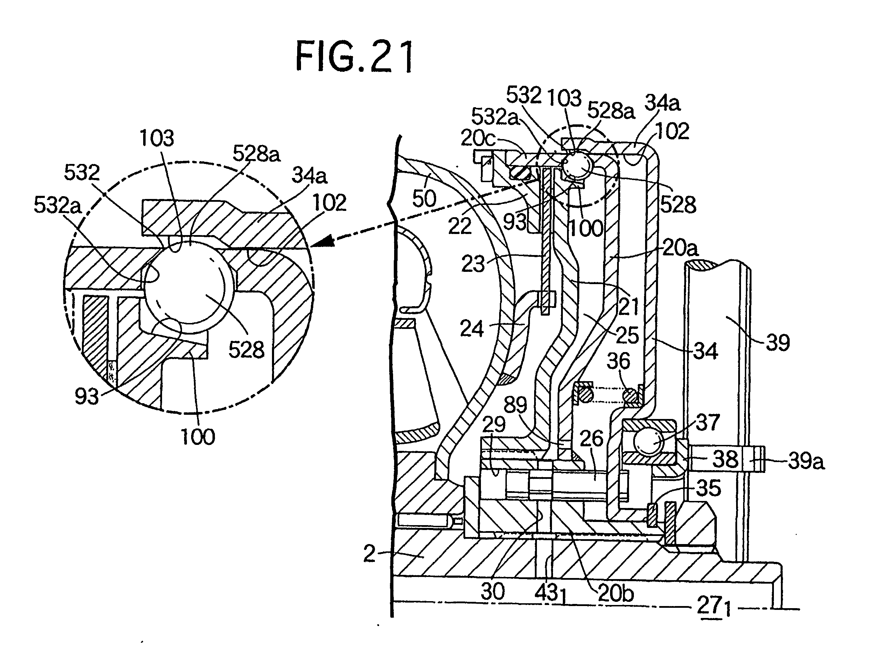

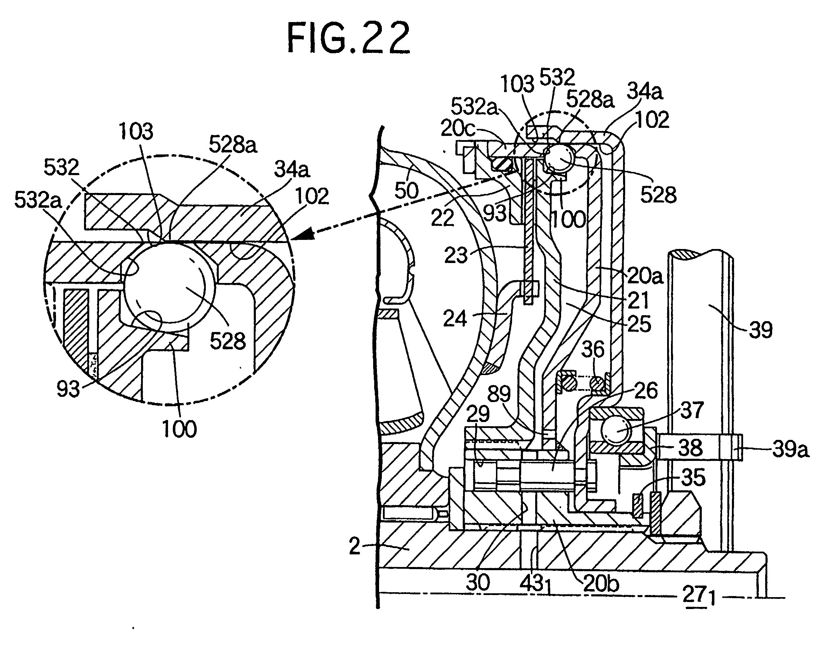

A sixth embodiment of the present invention will now be described with reference to Figs.21 and 22. In the sixth embodiment, a plurality of outlet bores 532 are provided at circumferentially equal distances in the outer peripheral wall 20c of the clutch casing 20 and open into the centrifugal hydraulic pressure chamber 25. An opening of each of the outlet bores 532 into the centrifugal hydraulic pressure chamber 25 is defined in a conical valve seat 532a, and a plurality of spherical outlet valves 528 are disposed, so that they can be seated on the valve seats 532a. For the purpose of retaining each of the outlet valves 528, a retaining,recess 93 and a retaining wall 100 similar to those in the embodiment shown in Fig.15 are formed in the pressing plate 21 which is rotated along with the clutch casing 20. Each of the outlet valves 528 is designed, so that a portion of the outlet valve 528 protrudes out of the outlet bore 532 outwards of the outer peripheral surface of the clutch casing 20 upon seating of the outlet valve 528 onto the valve seat 532a.

On the other hand, a cylindrical portion 34a is integrally connected to the valve operating plate 34 and slidably fitted over the outer periphery of the clutch casing 20. The cylindrical portion 34a includes a guide face 102 which is slidably fitted over the outer peripheral surface of the clutch casing 20, and an escape face 103 connected to the guide face 102 through an annular step and extending to an open end of the cylindrical portion 34a. When the guide face 102 is brought into a position in which it is opposed to the outlet bore 532, it urges, radially inwards, that portion of the outlet valve 528 which protrudes from the outlet bore 532. Even when the escape face 103 is brought into a position in which it is opposed to the outlet bore 532, the escape face 103 is sufficiently spaced apart from the outer peripheral surface of the clutch casing 20, so that it does not interfere the outlet valve 528 which is in its closed state. The other arrangement is similar to that in the first embodiment and hence, portions or components corresponding to those in the first embodiment are designated by like reference characters, and the description of them is omitted.

As shown in Fig. 21, in the clutch-ON position (the right position) of the valve operating plate 34, the escape face 103 of the cylindrical portion 34a assumes a position in which it is opposed to the outlet bore 532 in the clutch casing 20. However, the escape face 103 is sufficiently spaced apart from the outer peripheral surface of the clutch casing 20 and hence, even if a portion 528a of the outlet valve 528 seated on the valve seat 532a protrudes out of the outlet bore 532, the cylindrical portion 34a cannot interfere with the outlet valve 528. Therefore, the outlet valve 528 can ensure a seated state on the valve seat 532a under the action of its own centrifugal force and the centrifugal hydraulic pressure in the centrifugal hydraulic pressure chamber 25.

As shown in Fig.22, when the valve operating plate 34 is brought into the clutch-OFF position (the left portion), the guide face 102 of the cylindrical portion 34a is brought into a position in which it is opposed to the outlet bore 532 in the clutch casing 20. At this time, the guide face 102 urges that portion of the outlet valve 528 which protrudes out of the outlet bore 532, thereby moving the outlet valve 528 away from the valve seat 532a and thus, the outlet bore 532 can be opened. Upon opening of the outlet bore 532, the working oil discharged from the centrifugal hydraulic pressure chamber 25 through the outlet bore 532 flows out of the clutch casing 20 through a gap between the escape face 103 of the cylindrical portion 34a and the outer peripheral surface of the clutch casing 20.

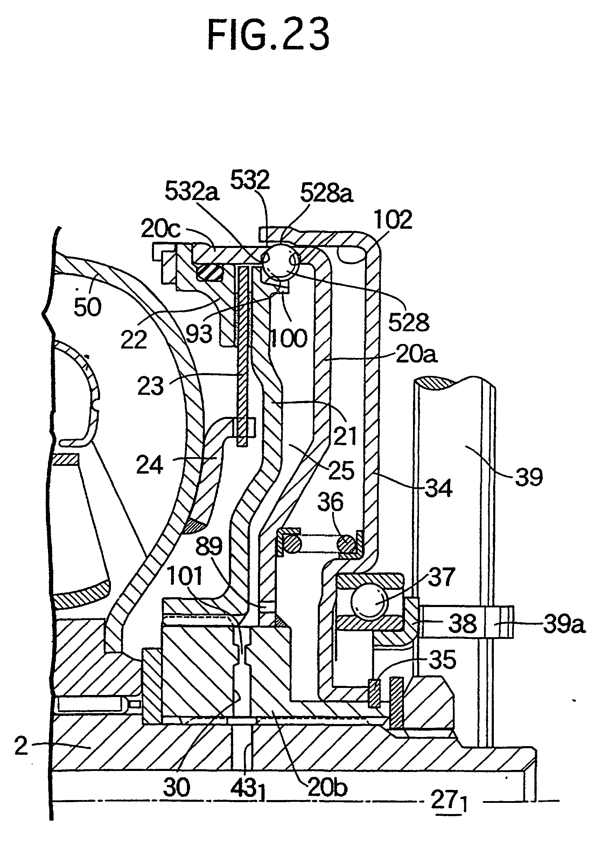

Finally, a seventh embodiment of the present invention will be described with reference to Fig.23.

In the seventh embodiment, the inlet valve 26 provided in the sixth embodiment shown in Fig. 21 is replaced by an orifice 101. More specifically, the orifice 101 for limiting the amount of the working oil from the upstream supply oil passage 27₁ to the centrifugal hydraulic pressure chamber 25 is provided in the through-bore 30 which is provided in the boss 20b of the clutch casing 20 and which connects the first flow-in bore 43₁ in the crankshaft 2 and the centrifugal hydraulic pressure chamber 25 in the clutch casing 20. The other arrangement is similar to that in the sixth embodiment shown in Fig. 21 and hence, portions or components corresponding to those in the sixth embodiment are designated by like reference characters in Fig.23, and the description of them is omitted.

If the valve operating plate 34 is operated into the clutch-OFF position to open each of the outlet valves 528, the amount of the working oil flowing from the upstream supply oil passage 27₁ into the centrifugal hydraulic pressure chamber 25 is limited by the orifice 101, while the working oil in the centrifugal hydraulic pressure chamber 25 flows smoothly out of the outlet bores 532. Therefore, the pressure in the centrifugal hydraulic pressure chamber 25 can be reduced immediately to turn the shifting clutch Cc into the OFF state. If the valve operating plate 34 is operated into the clutch-ON position to close each of the outlet valves 528, the centrifugal hydraulic pressure chamber 25 can be filled with the working oil passed through the orifice 101. Therefore, when the rotational speed of the crankshaft 2 is increased, the pressure in the centrifugal hydraulic pressure chamber 25 can be increased to turn the shifting clutch Cc into the ON-state. Particularly, even in this embodiment, the working oil is introduced from the upstream supply oil passage 27₁ through the through-bores 30 provided in the boss 20b of the clutch casing 20 into the centrifugal hydraulic pressure chamber 25. Therefore, the length of the oil passage between the upstream supply oil passage 27₁ and the centrifugal hydraulic pressure chamber 25 can be minimized, and the responsiveness of the shifting clutch Cc can be enhanced. Moreover, the discharging and supplying of the working oil from and into the centrifugal hydraulic pressure chamber 25 are conducted only by opening and closing of the outlet valves and hence, the arrangement can be simplified.

Although the embodiments of the present invention have been described in detail, it will be understood that the present invention is not limited to the above-described embodiments, and various modifications in design may be made without departing from the spirit and scope of the invention defined in claims. For example, the orifice 101 in the seventh embodiment shown in Fig.23 may be replaced by an inlet valve 26, 126 as used in the other embodiments. Even in the embodiments shown in Figs.11 and 22, a spring for biasing the spherical outlet valve 228, 528 may be mounted.

## Claims

1. A centrifugal hydraulic clutch comprising a clutch casing (20) connected to an input member (2) with one end face of the casing opened, a pressing plate (21) slidably mounted in said clutch casing (20), a pressure receiving plate (22) secured to the open end of said clutch casing (20), and a friction clutch plate (23) interposed between said pressing plate (21) and said pressure receiving plate (22) and connected to an output member (50), wherein a centrifugal hydraulic pressure chamber (25) is defined between said pressing plate (21) and an end wall (20a) of said clutch casing (20) and connected to a working oil supply passage (27₁) provided in said input member (2), and said friction clutch plate (23) is clamped between said pressing plate (21) and said pressure receiving plate (22) by a hydraulic pressure generated by a centrifugal force received by a working oil supplied to said centrifugal hydraulic pressure chamber (25),
**characterized in that** an inlet valve (26, 126) is provided in a boss (20b) of said clutch casing (20) connected to said input member (2) for bringing said working oil supply passage (27₁) and said centrifugal hydraulic pressure chamber (25) into and out of communication with each other, while an outlet valve (28, 128, 228, 328, 428, 528) is provided in an outer periphery of said clutch casing (20) for opening and closing the inside of said centrifugal hydraulic pressure chamber (25) with respect to the outside, and a valve operating means (A) is connected to said inlet valve (26, 126) and said outlet valve (28, 128, 228, 328, 428, 528) for alternately opening and closing said inlet and outlet valves.

2. A centrifugal hydraulic clutch comprising a clutch casing (20) connected to an input member (2) with one end face of the casing opened, a pressing plate (21) slidably mounted in said clutch casing (20), a pressure receiving plate (22) secured to the open end of said clutch casing (20), and a friction clutch plate (23) interposed between said pressing plate (21) and said pressure receiving plate (22) and connected to an output member (50), wherein a centrifugal hydraulic pressure chamber (25) is defined between said pressing plate (21) and an end wall (20a) of said clutch casing (20) and connected to a working oil supply passage (27₁) provided in said input member (2), and said friction clutch plate (23) is clamped between said pressing plate (21) and said pressure receiving plate (22) by a hydraulic pressure generated by a centrifugal force received by a working oil supplied to said centrifugal hydraulic pressure chamber (25),
**characterized in that** an orifice (101) is provided in a boss (20b) of said clutch casing (20) connected to said input member (2) for permitting said working oil supply passage (27₁) and said centrifugal hydraulic pressure chamber (25) to communicate with each other and for limiting the amount of a working oil flown from said working oil supply passage (27₁) to said centrifugal hydraulic pressure chamber (25), while an outlet valve (28, 128, 228, 328, 428, 528) is provided in an outer periphery of said clutch casing (20) for opening and closing the inside of said centrifugal hydraulic pressure chamber (25) with respect to the outside, and a valve operating means (A) is connected to said outlet valve (28, 128, 228, 328, 428, 528) for opening and closing said outlet valve.

3. A centrifugal hydraulic clutch according to claim 1, wherein said valve operating means (A) includes a common valve operating plate (34) which is connected to said inlet valve (26, 126) and said outlet valve (28, 128, 228, 328, 428, 528) and operated between a clutch-ON position and a clutch-OFF position, so that in the clutch-ON position of said valve operating plate (34), said inlet valve (26, 126) is opened and said outlet valve (28, 128, 228, 328, 428, 528) is closed, whereas in the clutch-OFF position, said inlet valve (26, 126) is closed and said outlet valve (28, 128, 228, 328, 428, 528) is opened.

4. A centrifugal hydraulic clutch according to claim 1 or 2, further including an outlet bore (32) which is provided in the outer periphery of the end wall (20a) of said clutch casing (20) and which opens into said centrifugal hydraulic pressure chamber (25), said outlet valve (28) comprising a reed valve being secured at its one end to said outer periphery of the end wall (20a) for opening and closing said outlet bore (32) on the side of said centrifugal hydraulic pressure chamber (25), said valve operating means (A) being connected, to said outlet valve (28) through a valve opening rod (31) passed through said outlet bore (32), wherein in the clutch-ON position of said valve operating means (A), said valve opening rod (31) is retracted from said outlet valve (28) to permit the closing of said outlet valve (28), and in the clutch-OFF position, said valve opening rod (31) is advanced to force said outlet valve (28) to be open.

5. A centrifugal hydraulic clutch according to claim 1 or 2, further including an outlet bore (132) which is provided in an outer peripheral wall (20c) of said clutch casing (20) and which opens into said centrifugal hydraulic pressure chamber (25), said outlet valve (128) being integrally formed on said valve operating means (A) and put into close contact with an outer peripheral surface of said outer peripheral wall (20c) in a slidable manner to open and close said outlet bore (132).

6. A centrifugal hydraulic clutch according to claim 1 or 2, further including an outlet bore (232) provided in an outer peripheral wall (20c) of said clutch casing (20), an end of said outlet bore (232) opening into said centrifugal hydraulic pressure chamber (25) being formed to serve as a conical valve seat (232a), said outlet valve (228) comprising a spherical valve member capable of seating on said valve seat (232a) by the action of a centrifugal force, said valve operating means (A) being connected to said outlet valve (228) through a valve opening rod (95) passed through the end wall (20a) of said clutch casing (20), wherein in the clutch-ON position of said valve operating means (A), said valve opening rod (95) is retracted from said outlet valve (228) to permit the closing of said outlet valve (228), and in the clutch-OFF position, said valve opening rod (95) is advanced to force said outlet valve (228) to be open.

7. A centrifugal hydraulic clutch according to claim 1 or 2, further including an outlet bore (332) which is provided in an outer periphery of the end wall of said clutch casing and which opens into said centrifugal hydraulic pressure chamber (25), said outlet valve (328, 428) being coupled to said valve operating means (A) for opening and closing said outlet bore (332), and having a guide portion (328b, 428b) formed thereon and loosely engaged in said outlet bore (332).

8. A centrifugal hydraulic clutch according to claim 1 or 2, further including an outlet bore (532) provided in an outer peripheral wall (20c) of said clutch casing (20), an end of said outlet bore (532) opening into said centrifugal hydraulic pressure chamber (25) being formed to serve as a valve seat (532a), said outlet valve (528) being provided so as to be capable of seating on said valve seat (532a) by the action of a centrifugal force, said outlet valve (528) having a portion (528a) which protrudes out of said outlet bore (532) to the outer periphery of said clutch casing (20) upon seating of said outlet valve (528) on said valve seat (532a), said valve operating means (A) being arranged to permit the seating of said outlet valve (528) on said valve seat (532a) in the clutch-ON position of said valve operating means (A), and to urge said protruding portion (528a) of said outlet valve (528) radially inwards to move said outlet valve (528) away from said valve seat (532a) in the clutch-OFF position.

9. A centrifugal hydraulic clutch according to any one of claims 1 to 3, wherein said clutch casing (20) has an air bore (89) provided therein and permitting an inner peripheral side of said centrifugal hydraulic pressure chamber (25) to communicate with the outside.

10. A centrifugal hydraulic clutch according to any one of claims 1 to 3, wherein a plurality of said inlet valves (26, 126) are disposed in a circumferential direction of said clutch casing (20).

11. A centrifugal hydraulic clutch according to any one of claims 1 to 3, wherein a plurality of said outlet valves (28, 128, 228, 328, 428, 528) are disposed in a circumferential direction of said clutch casing (20).

## Patentansprüche

1. Zentrifugal-Hydraulikkupplung, die ein Kupplungsgehäuse (20) aufweist, welches mit einem Leistungsaufnahmeteil (2) verbunden ist, wobei eine Endfläche des Gehäuses geöffnet ist, eine Druckplatte (21), die im Kupplungsgehäuse (20) verschiebbar befestigt ist, eine Druckaufnahmeplatte (22), die am offenen Ende des Kupplungsgehäuses (20) befestigt ist, und eine Reibungskupplungsplatte (23), welche zwischen der Druckplatte (21) und der Druckaufnahmeplatte (22) angeordnet ist und die mit einem Leistungsabgabeteil (50) verbunden ist, wobei eine Zentrifugal-Hydraulikdruckkammer (25) zwischen der Druckplatte (21) und einer Endwand (20a) des Kupplungsgehäuses (20) angeordnet ist und mit einem Betriebsöl-Zufuhrkanal (27₁) verbunden ist, der im Leistungsaufnahmeteil (2) vorgesehen ist, und die Reibungskupplungsplatte (23) zwischen der Druckplatte (21) und der Druckaufnahmeplatte (22) durch einen Hydraulikdruck eingespannt ist, der durch eine Zentrifugalkraft erzeugt wird, die durch ein Betriebsöl erhalten wird, welches zur Zentrifugal-Hydraulikdruckkammer (25) geliefert wird,
**dadurch gekennzeichnet, dass** ein Einlassventil (26, 126) in einem Ansatz (20b) des Kupplungsgehäuses (20) vorgesehen ist, der mit dem Leistungsaufnahmeteil (2) verbunden ist, um den Betriebsöl-Zufuhrkanal (27₁) und die Zentrifugal-Hydraulikdruckkammer (25) in und aus einer Verbindung miteinander zu bringen, während ein Auslassventil (28, 128, 228, 328, 428, 528) in einem äußeren Umfang des Kupplungsgehäuses (20) vorgesehen ist, um die Innenseite der Zentrifugal-Hydraulikdruckkammer (25) in bezug auf die Außenseite zu öffnen und zu verschließen, und eine Ventilbetätigungseinrichtung (A) mit dem Einlassventil (26, 126) und dem Auslassventil (28, 128, 228, 328, 428, 528) verbunden ist, um abwechselnd das Einlassventil und das Auslassventil zu öffnen und zu verschließen.

2. Zentrifugal-Hydraulikkupplung, welche ein Kupplungsgehäuse (20) aufweist, welches mit einem Leistungsaufnahmeteil (2) verbunden ist, wobei eine Endfläche des Gehäuses geöffnet ist, eine Druckplatte (21), die verschiebbar im Kupplungsgehäuse (20) befestigt ist, eine Druckaufnahmeplatte (22), welche am offenen Ende des Kupplungsgehäuses (20) gesichert ist, und eine Reibungskupplungsplatte (23), welche zwischen der Druckplatte (21) und der Druckaufnahmeplatte (22) angeordnet ist und die mit einem Leistungsabgabeteil (50) verbunden ist, wobei ein Zentrifugal-Hydraulikdruckkammer (25) zwischen der Druckplatte (21) und einer Endwand (20a) des Kupplungsgehäuses (20) angeordnet ist und mit einem Betriebsöl-Zufuhrkanal (27₁) verbunden ist, der im Leistungsaufnahmeteil (2) vorgesehen ist, und die Reibungskupplungsplatte (23) zwischen der Druckplatte (21) und der Druckaufnahmeplatte (22) durch einen Hydraulikdruck eingespannt ist, der durch eine Zentrifugalkraft erzeugt wird, die durch ein Betriebsöl erhalten wird, welches zur Zentrifugal-Hydraulikdruckkammer (25) geliefert wird,
**dadurch gekennzeichnet, dass** eine Verengung (101) in einem Ansatz (20b) des Kupplungsgehäuses (20) vorgesehen ist, welcher mit dem Leistungsaufnahmeteil (2) verbunden ist, um zuzulassen, dass der Betriebsöl-Zufuhrkanal (27₁) und die Zentrifugal-Hydraulikdruckkammer (25) miteinander kommunizieren und um die Menge an Betriebsöl zu beschränken, welches vom Betriebsöl-Zufuhrkanal (27₁) zur Zentrifugal-Hydraulikdruckkammer (25) fließt, während ein Auslassventil (28, 128, 228, 328, 428, 528) in einem Außenumfang des Kupplungsgehäuses (20) vorgesehen ist, um die Innenseite der Zentrifugal-Hydraulikdruckkammer (25) in bezug auf die Außenseite zu öffnen und zu verschließen, und eine Ventilbetätigungseinrichtung (A) mit dem Auslassventil (28, 128, 228, 328, 428, 528) verbunden ist, um das Auslassventil zu öffnen und zu verschließen.

3. Zentrifugal-Hydraulikkupplung nach Anspruch 1, wobei die Ventilbetätigungseinrichtung (A) eine gemeinsame Ventilbetätigungsplatte (34) aufweist, welche mit dem Einlassventil (26, 126) und dem Auslassventil (28, 128, 228, 328, 428, 528) verbunden ist und zwischen einer Kupplungseinschaltposition und einer Kupplungsausschaltposition betätigt wird, so dass in der Kupplungseinschaltposition der Ventilbetätigungsplatte (34) das Einlassventil (26, 126) geöffnet ist und das Auslassventil (28, 128, 228, 328, 428, 528) geschlossen ist, während in der Kupplungsausschaltposition das Einlassventil (26, 126) geschlossen ist und das Auslassventil (28, 128, 228, 328, 428, 528) geöffnet ist.

4. Zentrifugal-Hydraulikkupplung nach Anspruch 1 oder 2, die außerdem eine Auslassbohrung (32) aufweist, welche im äußeren Umfang der Endwand (20a) des Kupplungsgehäuses (20) vorgesehen ist, welche sich in die Zentrifugal-Hydraulikdruckkammer (25) öffnet, wobei das Auslassventil (28) ein Membranventil aufweist, welches an seinem einen Ende an dem äußeren Umfang der Endwand (20a) gesichert ist, um die Auslassbohrung (32) auf der Seite der Zentrifugal-Hydraulikdruckkammer (25) zu öffnen und zu verschließen, wobei die Ventilbetätigungseinrichtung (A) mit dem Auslassventil (28) über einen Ventilöffnungsstab (31) verbunden ist, der durch die Auslassbohrung (32) läuft, wobei in der Kupplungseinschaltposition der Ventilbetätigungseinrichtung (A) der Ventilöffnungsstab (31) vom Auslassventil (28) zurückgezogen wird, um das Schließen des Auslassventils (28) zuzulassen, und in der Kupplungsausschaltposition der Ventilöffnungsstab (31) nach vorne geschoben wird, um das Auslassventil (28) zu zwingen, dass es offen ist.

5. Zentrifugal-Hydraulikkupplung nach Anspruch 1 oder 2, die außerdem eine Auslassbohrung (132) aufweist, die in einer äußeren Umfangswand (20c) des Kupplungsgehäuses (20) vorgesehen ist und welche sich in die Zentrifugal-Hydraulikdruckkammer (25) öffnet, wobei das Auslassventil (128) integriert auf der Ventilbetätigungseinrichtung (A) gebildet ist und in engem Kontakt mit einer äußeren Umfangsfläche der äußeren Umfangswand (20c) gleitend gebracht wird, um die Auslassbohrung (132) zu öffnen und zu verschließen.

6. Zentrifugal-Hydraulikkupplung nach Anspruch 1 oder 2, die außerdem eine Auslassbohrung (232) aufweist, welche in einer äußeren Umfangswand (20c) des Kupplungsgehäuses (20) vorgesehen ist, wobei sich ein Ende der Auslassbohrung (232) in die Zentrifugal-Hydraulikdruckkammer (25) öffnet, die ausgebildet ist, um als konischer Ventilsitz (232a) zu dienen, wobei das Auslassventil (228) ein Kugelventilteil aufweist, welches in der Lage ist, auf den Ventilsitz (232a) durch die Wirkung einer Zentrifugalkraft zu aufzusetzen, wobei die Ventilbetätigungseinrichtung (A) mit dem Auslassventil (228) über einen Ventilöffnungsstab (95) verbunden ist, der durch die Endwand (20a) des Ventilgehäuses (20) läuft, wobei in der Kupplungseinschaltposition der Ventilbetätigungseinrichtung (A) der Ventilöffnungsstab (95) vom Auslassventil (228) zurückgezogen wird, um das Schließen des Auslassventils (228) zuzulassen, und in der Kupplungsausschaltposition der Ventilöffnungsstab (95) vorgeschoben wird, um das Auslassventil (228) zu zwingen, dass es offen ist.

7. Zentrifugal-Hydraulikkupplung nach Anspruch 1 oder 2, die außerdem eine Auslassbohrung (332) aufweist, welche in einem äußeren Umfang der Endwand des Kupplungsgehäuses vorgesehen ist und welche sich in die Zentrifugal-Hydraulikdruckkammer (25) öffnet, wobei das Auslassventil (328, 428) mit der Ventilbetätigungseinrichtung (A) gekoppelt ist, um die Auslassbohrung (332) zu öffnen und zu verschließen, und einen Führungsbereich (328b, 428b) hat, der darauf gebildet ist und der in die Auslassbohrung (332) lose eingreift.

8. Zentrifugal-Hydraulikkupplung nach Anspruch 1 oder 2, die außerdem eine Auslassbohrung (532) aufweist, welche in einer äußeren Umfangswand (20c) des Kupplungsgehäuses (20) vorgesehen ist, wobei ein Ende der Auslassbohrung (532) sich in die Zentrifugal-Hydraulikdruckkammer (25) öffnet, die ausgebildet ist, um als Ventilsitz (532a) zu dienen, wobei das Auslassventil (528) so vorgesehen ist, dass dies in der Lage ist, auf dem Ventilsitz (532a) durch die Wirkung einer Zentrifugalkraft aufzusetzen, wobei das Auslassventil (528) einen Bereich (528a) hat, der aus der Auslassbohrung (532) zum äußeren Umfang des Kupplungsgehäuses (20) nach dem Aufsetzen des Auslassventils (528) auf dem Ventilsitz (532a) hervorsteht, wobei die Ventilbetätigungseinrichtung (A) eingerichtet ist, das Aufsetzen des Auslassventils (528) auf dem Ventilsitz (532a) in der Kupplungseinschaltposition der Ventilbetätigungseinrichtung (A) zuzulassen und um den hervorstehenden Bereich (528a) des Auslassventils (528) radial nach innen zu zwingen, um das Auslassventil (528) weg von dem Ventilsitz (532a) in der Kupplungsausschaltposition zu bewegen.

9. Zentrifugal-Hydraulikkupplung nach einem der Ansprüche 1 bis 3, wobei das Kupplungsgehäuse (20) eine Luftbohrung (89) aufweist, die darin vorgesehen ist und die zulässt, dass eine innere Umfangsseite der Zentrifugal-Hydraulikdruckkammer (25) mit der Außenseite kommuniziert.

10. Zentrifugal-Hydraulikkupplung nach einem der Ansprüche 1 bis 3, wobei mehrere Einlassventile (26, 126) in einer Umfangsrichtung des Kupplungsgehäuses (20) angeordnet sind.

11. Zentrifugal-Hydraulikkupplung nach einem der Ansprüche 1 bis 3, wobei mehrere Auslassventile (28, 128, 228, 328, 428, 528) in einer Umfangsrichtung des Kupplungsgehäuses (20) angeordnet sind..

## Revendications

1. Embrayage hydraulique centrifuge comprenant un carter d'embrayage (20) relié à un élément d'entrée (2) avec une face frontale du carter ouverte, une plaque de poussée (21) montée en vue de son coulissement dans ledit carter d'embrayage (20), un plateau de réception de pression (22) fixé à l'extrémité ouverte dudit carter d'embrayage (20), et un plateau d'embrayage à friction (23) interposé entre ladite plaque de poussée (21) et ledit plateau de réception de pression (22) et relié à un élément de sortie (50), dans lequel une chambre de pression hydraulique centrifuge (25) est définie entre ladite plaque de poussée (21) et une paroi d'extrémité (20a) dudit carter d'embrayage (20) et relié à une conduite d'huile de fonctionnement (27₁) prévue dans ledit élément d'entrée (2), et ledit plateau d'embrayage à friction (23) est bloqué entre ladite plaque de poussée (21) et ledit plateau de réception de pression (22) par une pression hydraulique générée par une force centrifuge reçue par une huile de fonctionnement fournie à ladite chambre de pression hydraulique centrifuge (25),
**caractérisé en ce qu'**une soupape d'admission (26, 126) est prévue dans un bossage (20b) dudit carter d'embrayage (20) relié audit élément d'entrée (2) pour mettre ladite conduite d'huile de fonctionnement (27₁) et ladite chambre de pression hydraulique centrifuge (25) en communication et hors de communication l'un avec l'autre, tandis qu'un clapet de refoulement (28, 128, 228, 328, 428, 528) est prévu dans une périphérie extérieure dudit carter d'embrayage (20) pour ouvrir et fermer l'intérieur de ladite chambre de pression hydraulique centrifuge (25) par rapport à l'extérieur, et un moyen d'actionnement de soupape (A) est relié à ladite soupape d'admission (26, 126) et audit clapet de refoulement (28, 128, 228, 328, 428, 528) pour ouvrir et fermer par alternance ladite soupape d'admission et ledit clapet de refoulement.

2. Embrayage hydraulique centrifuge comprenant un carter d'embrayage (20) relié à un élément d'entrée (2) avec une face frontale du carter ouverte, une plaque de poussée (21) montée en vue de son coulissement dans ledit carter d'embrayage (20), un plateau de réception de pression (22) fixé à l'extrémité ouverte dudit carter d'embrayage (20), et un plateau d'embrayage à friction (23) interposé entre ladite plaque de poussée (21) et ledit plateau de réception de pression (22) et relié à un élément de sortie (50), dans lequel une chambre de pression hydraulique centrifuge (25) est définie entre ladite plaque de poussée (21) et une paroi d'extrémité (20a) dudit carter d'embrayage (20) et relié à une conduite d'huile de fonctionnement (27₁) prévue dans ledit élément d'entrée (2), et ledit plateau d'embrayage à friction (23) est bloqué entre ladite plaque de poussée (21) et ledit plateau de réception de pression (22) par une pression hydraulique générée par une force centrifuge reçue par une huile de fonctionnement fournie à ladite chambre de pression hydraulique centrifuge (25),
**caractérisé en ce qu'**un orifice (101) est prévu dans un bossage (20b) dudit carter d'embrayage (20) relié audit élément d'entrée (2) pour permettre à ladite conduite d'huile de fonctionnement (27₁) et à ladite chambre de pression hydraulique centrifuge (25) de communiquer l'une avec l'autre et pour limiter la quantité d'une huile de fonctionnement écoulée de ladite conduite d'huile de fonctionnement (27₁) à ladite chambre de pression hydraulique centrifuge (25), tandis qu'un clapet de refoulement (28, 128, 228, 328, 428, 528) est prévu dans une périphérie extérieure dudit carter d'embrayage (20) pour ouvrir et fermer l'intérieur de ladite chambre de pression hydraulique centrifuge (25) par rapport à l'extérieur, et un moyen d'actionnement de soupape (A) est relié audit clapet de refoulement (28, 128, 228, 328, 428, 528) pour ouvrir et fermer ladite soupape d'admission et ledit clapet de refoulement.

3. Embrayage hydraulique centrifuge selon la revendication 1, dans lequel ledit moyen d'actionnement de soupape (A) comprend une plaque de manoeuvre commune de soupape (34) qui est reliée à ladite soupape d'admission (26, 126) et audit clapet de refoulement (28, 128, 228, 328, 428, 528) et actionnée entre une position embrayage OUVERT et une position embrayage FERME, de telle sorte que dans la position embrayage OUVERT de ladite plaque de manoeuvre de soupape (34), ladite soupape d'admission (26, 126) est ouverte et ledit clapet de refoulement (28, 128, 228, 328, 428, 528) est fermé, tandis que dans la position embrayage FERME, ladite soupape d'admission (26, 126) est fermée et ledit clapet de refoulement (28, 128, 228, 328, 428, 528) est ouvert.

4. Embrayage hydraulique centrifuge selon la revendication 1 ou 2, comprenant, en outre, un alésage de sortie (32) qui est prévu dans la périphérie extérieure de la paroi d'extrémité (20a) dudit carter d'embrayage (20) et qui s'ouvre dans ladite chambre de pression hydraulique centrifuge (25), ledit clapet de refoulement (28) comprenant une soupape à clapets qui est fixée au niveau d'une de ses extrémités à ladite périphérie extérieure de la paroi d'extrémité (20a) pour ouvrir et fermer ledit alésage de sortie (32) sur le côté de ladite chambre de pression hydraulique centrifuge (25), ledit moyen d'actionnement de soupape (A) étant relié audit clapet de refoulement (28) à travers la tige d'ouverture de soupape (31) passée à travers ledit alésage de sortie (32), dans lequel, dans la position embrayage OUVERT dudit moyen d'actionnement de soupape (A), ladite tige d'ouverture de soupape (31) est rétractée depuis ledit clapet de refoulement (28) pour permettre la fermeture dudit clapet de refoulement (28), et dans la position embrayage FERME, ladite tige d'ouverture de soupape (31) est avancée pour forcer ledit clapet de refoulement (28) à être ouvert.

5. Embrayage hydraulique centrifuge selon la revendication 1 ou 2, comprenant, en outre, un alésage de sortie (132) qui est prévu dans une paroi périphérique extérieure (20c) dudit carter d'embrayage (20) et qui s'ouvre dans ladite chambre de pression hydraulique centrifuge (25), ledit clapet de refoulement (128) étant intégralement formé sur ledit moyen d'actionnement de soupape (A) et mis en étroit contact avec une surface périphérique extérieure de ladite paroi périphérique extérieure (20c) de manière à pouvoir coulisser pour ouvrir et fermer ledit alésage de sortie (132).

6. Embrayage hydraulique centrifuge selon la revendication 1 ou 2, comprenant, en outre, un alésage de sortie (232) prévu dans une paroi périphérique extérieure (20c) dudit carter d'embrayage (20), une extrémité dudit alésage de sortie (232) s'ouvrant dans ladite chambre de pression hydraulique centrifuge (25) qui est formée pour servir de siège de soupape conique (232a), ledit clapet de refoulement (228) comprenant un élément de soupape sphérique capable de s'asseoir sur ledit siège de soupape (232a) par l'action d'une force centrifuge, ledit moyen d'actionnement de soupape (A) étant relié audit clapet de refoulement (228) à travers une tige d'ouverture de soupape (95) passée à travers la paroi d'extrémité (20a) dudit carter d'embrayage (20), dans lequel, dans la position embrayage OUVERT dudit moyen d'actionnement de soupape (A), ladite tige d'ouverture de soupape (95) est rétractée depuis ledit clapet de refoulement (228) pour permettre l'ouverture dudit clapet de refoulement (228), et dans la position embrayage FERME, ladite tige d'ouverture de soupape (95) est avancée pour forcer ledit clapet de refoulement (228) à être ouvert.

7. Embrayage hydraulique centrifuge selon la revendication 1 ou 2, comprenant, en outre, un alésage de sortie (332) qui est prévu dans une périphérie extérieure de la paroi extérieure dudit carter d'embrayage et qui s'ouvre dans ladite chambre de pression hydraulique centrifuge (25), ledit clapet de refoulement (328, 428) étant couplé audit moyen d'actionnement de soupape (A) pour ouvrir et fermer ledit alésage de sortie (332), et comportant une partie de guidage (328b, 428b) formée dessus et engagée sans serrage dans ledit alésage de sortie (332).

8. Embrayage hydraulique centrifuge selon la revendication 1 ou 2, comprenant, en outre, un alésage de sortie (532) prévu dans une paroi périphérique extérieure (20c) dudit carter d'embrayage (20), une extrémité dudit alésage de sortie (532) s'ouvrant dans ladite chambre de pression hydraulique centrifuge (25) qui est formée pour servir de siège de soupape conique (532a), ledit clapet de refoulement (528) étant prévu de manière à être capable de s'asseoir sur ledit siège de soupape (532a) par l'action d'une force centrifuge, ledit clapet de refoulement (528) comportant une partie (528a) qui fait saillie hors dudit alésage de sortie (532) vers ladite périphérie extérieure dudit carter d'embrayage (20) lors de l'assise dudit clapet de refoulement (528) sur ledit siège de soupape (532a), ledit moyen d'actionnement de soupape (A) étant disposé pour permettre l'assise dudit clapet de refoulement (528) sur ledit siège de soupape (532a) dans la position embrayage OUVERT dudit moyen d'actionnement de soupape (A), et pour pousser ladite partie faisant saillie (528a) dudit clapet de refoulement (528) radialement vers l'intérieur pour éloigner ledit clapet de refoulement (528) dudit siège de soupape (532a) dans la position embrayage FERME.

9. Embrayage hydraulique centrifuge selon l'une quelconque des revendications 1 à 3, dans lequel ledit carter d'embrayage (20) comporte un alésage d'air (89) prévu à l'intérieur dudit carter et permettant à un côté périphérique intérieur de ladite chambre de pression hydraulique centrifuge (25) de communiquer avec l'extérieur.

10. Embrayage hydraulique centrifuge selon l'une quelconque des revendications 1 à 3, dans lequel une pluralité desdites soupapes d'admission (26, 126) sont disposées dans un sens de la circonférence dudit carter d'embrayage (20).

11. Embrayage hydraulique centrifuge selon l'une quelconque des revendications 1 à 3, dans lequel une pluralité desdites soupapes de refoulement (28, 128, 228, 328, 428, 528) sont disposées dans un sens de la circonférence dudit carter d'embrayage (20).
